(19) **Europäisches Patentamt**
**European Patent Office**
**Office européen des brevets**

(11) **EP 4 664 747 A1**

(12) **EUROPEAN PATENT APPLICATION**
published in accordance with Art. 153(4) EPC

(43) Date of publication:
**17.12.2025 Bulletin 2025/51**

(51) International Patent Classification (IPC):
**H02P 21/22** (2016.01)     **H02K 3/18** (2006.01)
**H02P 25/22** (2006.01)

(21) Application number: **24753059.5**

(52) Cooperative Patent Classification (CPC):
**H02K 3/18; H02P 21/22; H02P 25/22**

(22) Date of filing: **15.01.2024**

(86) International application number:
**PCT/JP2024/000792**

(87) International publication number:
**WO 2024/166613 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **07.02.2023   JP 2023017138**

(71) Applicant: **DENSO CORPORATION**
**Kariya-city, Aichi 448-8661 (JP)**

(72) Inventors:
• **KATO, Hidenori**
  **Kariya-city, Aichi 448-8661 (JP)**
• **FUJII, Kiyoshi**
  **Kariya-city, Aichi 448-8661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **ROTATING ELECTRIC MACHINE AND CONTROL PROGRAM**

(57)   A rotating electrical machine (10) includes a current command unit (101) configured to determine a current command value (Id*, Iq*) in a first dq coordinate system, in which a current phase difference ($\beta$) has been corrected through conversion from a three-phase coordinate system, and a flux-weakening control unit (110) configured to determine a flux-weakening current ($\Delta$Id) in flux-weakening control based on a q-axis command voltage (Vq') in a second dq coordinate system, in which a voltage phase difference ($\delta$v) has been corrected through conversion from a three-phase coordinate system. The current command unit is configured to determine a d-axis current command value based on the flux-weakening current input from the flux-weakening control unit.

**FIG. 10**

**Description**

CROSS REFERENCE TO RELATED APPLICATION

This application is based on Japanese Patent Application No. 2023-017138 filed on February 7, 2023, the contents of which are incorporated herein by reference.

TECHNICAL FIELD

The present disclosure relates to a rotating electric machine and a control program.

BACKGROUND ART

Conventionally, a rotating electric machine is known to include a first armature winding to which three-phase current is supplied from a first inverter, and a second armature winding to which three-phase current is supplied from a second inverter (for example, Patent Literature 1). The rotating electric machine described in Patent Literature 1 includes coil bodies Ua, Va, Wa formed by winding the first armature winding around a first tooth, coil bodies Ub, Vb, Wb formed by winding the second armature winding around a second tooth, and coil bodies Uc, Vc, Wc formed by winding both the first armature winding and the second armature winding around a third tooth. The phase difference between the current flowing through the first armature winding wound around the third tooth and the current flowing through the second armature winding wound around the third tooth is set such that the phase difference in electrical angle between the magnetomotive force of each of the coil bodies Ua, Va, Wa and the magnetomotive force of each of the coil bodies Ub, Vb, Wb is 20 degrees. Additionally, the phase difference in electrical angle between the magnetomotive force of each of the coil bodies Ub, Vb, Wb and the magnetomotive force of each of the coil bodies Uc, Vc, Wc is 20 degrees. As a result, the 6th or 12th harmonic components are canceled out, thereby suppressing torque ripple.

PRIOR ART LITERATURE

PATENT LITERATURE

Patent Literature 1: JP 7103299 B

SUMMARY OF INVENTION

However, it has been found that in the rotating electric machine described in Patent Literature 1, conventional methods of performing flux weakening control cannot be appropriately implemented.
The present disclosure has been made in view of the above circumstances, and it is an object to provide a rotating electric machine and a control program capable of appropriately implementing flux weakening control.
According to a first aspect of the present disclosure, a rotating electric machine includes a rotor having multiple magnetic poles with alternating polarities in a circumferential direction, and a stator including multiple-phase stator windings and a stator core having teeth provided at predetermined intervals in the circumferential direction. The stator windings are wound around the teeth. The stator windings include first stator windings to which currents in three phases are supplied by a first inverter, and second stator windings to which currents in the three phases are supplied by a second inverter. The currents in the three phases supplied by the first inverter and the currents in the three phases supplied by the second inverter have a predetermined current phase difference in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The rotating electrical machine further includes a current command unit

2

configured to determine a current command value in a first dq coordinate system, in which the current phase difference has been corrected through conversion from a three-phase coordinate system. The rotating electrical machine further includes a flux-weakening control unit configured to determine a flux-weakening current in flux-weakening control based on a q-axis command voltage in a second dq coordinate system, in which a voltage phase difference has been corrected through conversion from a three-phase coordinate system, the voltage phase difference being a phase difference between a voltage of each phase in the first stator windings and a voltage of each phase in the second stator windings. The current command unit is configured to determine a d-axis current command value based on the flux-weakening current input from the flux-weakening control unit.

According to a second aspect of the present disclosure, a rotating electric machine includes a rotor having multiple magnetic poles with alternating polarities in a circumferential direction, and a stator including multiple-phase stator windings and a stator core having teeth provided at predetermined intervals in the circumferential direction. The stator windings are wound around the teeth. The stator windings include first stator windings to which currents in three phases are supplied by a first inverter, and second stator windings to which currents in the three phases are supplied by a second inverter. The currents in the three phases supplied by the first inverter and the currents in the three phases supplied by the second inverter have a predetermined current phase difference in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The rotating electrical machine further includes a current command unit configured to determine a current command value in a first dq coordinate system, in which the current phase difference has been corrected through conversion from a three-phase coordinate system. The rotating electrical machine further includes an absolute value calculation unit configured to calculate an absolute value of an induced voltage of the stator windings based on a sum of squares of a d-axis command voltage and a q-axis command voltage in the first dq coordinate system. The rotating electrical machine further includes a flux-weakening control unit configured to determines a flux-weakening current in flux-weakening control based on the absolute value. The current command unit is configured to determine a d-axis current command value based on the flux-weakening current input from the flux-weakening control unit.

According to a third aspect of the present disclosure, a control program is executed by a controller of a rotating electric machine. The rotating electric machine includes a rotor having multiple magnetic poles with alternating polarities in a circumferential direction, and a stator including multiple-phase stator windings and a stator core having teeth provided at predetermined intervals in the circumferential direction. The stator windings are wound around the teeth. The stator windings include first stator windings to which currents in three phases are supplied by a first inverter, and second stator windings to which currents in the three phases are supplied by a second inverter. The currents in the three phases supplied by the first inverter and the currents in the three phases supplied by the second inverter have a predetermined current phase difference in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The program is configured to cause the controller to perform a current command process determining a current command value in a first dq coordinate system, in which the current phase difference has been corrected through conversion from a three-phase coordinate system. The program is configured to cause the controller to perform a flux-weakening control process determining a flux-weakening current in flux-weakening control based on a q-axis command voltage in a second dq coordinate system, in which a voltage phase difference has been corrected through conversion from a three-phase coordinate system, the voltage phase difference being a phase difference between a voltage of each phase in the first stator windings and a voltage of each phase in the second stator windings. The current command process includes determining a d-axis current command value based on the flux-weakening current input from the flux-weakening control unit.

According to a fourth aspect of the present disclosure, a control program is executed by a controller of a rotating electric machine. The rotating electric machine includes a rotor having multiple magnetic poles with alternating polarities in a circumferential direction, and a stator including multiple-phase stator windings and a stator core having teeth provided at predetermined intervals in the circumferential direction. The stator windings are wound around the teeth. The stator windings include first stator windings to which currents in three phases are supplied by a first inverter, and second stator windings to which currents in the three phases are supplied by a second inverter. The currents in the three phases supplied by the first inverter and the currents in the three phases supplied by the second inverter have a predetermined current phase difference in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The program is configured to cause the controller to perform a current command process determining a current command value in a first dq coordinate system, in which the current phase difference has been corrected through conversion from a three-phase coordinate system. The program is configured to cause the controller to perform an absolute value calculation process calculating an absolute value of an induced voltage based on a sum of squares of a d-axis command voltage and a q-axis command voltage in the first dq coordinate system. The program is configured to cause the controller to perform a flux-weakening control process determining a flux-weakening current in flux-weakening control based on the absolute value. The current command process includes determining a d-axis current command value based on the flux-weakening current determined in the flux-weakening control process.

According to the above aspects, appropriate flux weakening control can be implemented.


BRIEF DESCRIPTION OF DRAWINGS

The above and other objects, features and advantages of the present disclosure will become more apparent from the following detailed description made with reference to the accompanying drawings. In the drawings:

FIG. 1 is a longitudinal sectional view illustrating a motor;
FIG. 2 is a cross-sectional view illustrating the motor;
FIG. 3 is a diagram illustrating an electrical configuration of a controller;
FIG. 4 is a diagram illustrating arrangement of partial windings;
FIG. 5 is a diagram illustrating stator windings;
FIG. 6 is a diagram illustrating arrangement of lead wires;
FIG. 7 is a diagram illustrating harmonic components of torque;
FIG. 8 is a vector diagram illustrating summation of magnetomotive forces;
FIG. 9 is a diagram illustrating fluctuation of electromagnetic force;
FIG. 10 is a diagram illustrating a control process according to a first embodiment;
FIG. 11(a) is a diagram illustrating a phase of each phase current, and FIG. 11(b) is a diagram illustrating a phase of each phase voltage;
FIG. 12 is a diagram illustrating a relationship between a current phase difference and a voltage phase difference;
FIG. 13 is a diagram illustrating a deviation between a current axis and a voltage axis;
FIG. 14 is a diagram illustrating a control process according to a second embodiment;
FIG. 15 is a diagram illustrating a control process according to a third embodiment;
FIG. 16 is a diagram illustrating arrangement of partial windings according to the second embodiment;

FIG. 17 is a cross-sectional view illustrating a motor;
FIG. 18 is a vector diagram illustrating summation of magnetomotive forces according to the second embodiment;
FIG. 19 is a diagram illustrating arrangement of partial windings according to the third embodiment;
FIG. 20 is a diagram illustrating arrangement of partial windings according to a fourth embodiment;
FIG. 21 is a diagram illustrating arrangement of partial windings according to another example;
FIG. 22 is a diagram illustrating arrangement of partial windings according to another example; and
FIG. 23 is a diagram illustrating arrangement of partial windings according to another example.

DESCRIPTION OF EMBODIMENTS

First Embodiment

Hereinafter, embodiments will be described with reference to the drawings. In the following embodiments, parts that are identical or equivalent to each other are denoted by the same reference numerals in the drawings, and the description of parts with the same reference numerals is incorporated by reference. In the first embodiment, a motor 10 as a rotating electric machine will be illustrated and described.

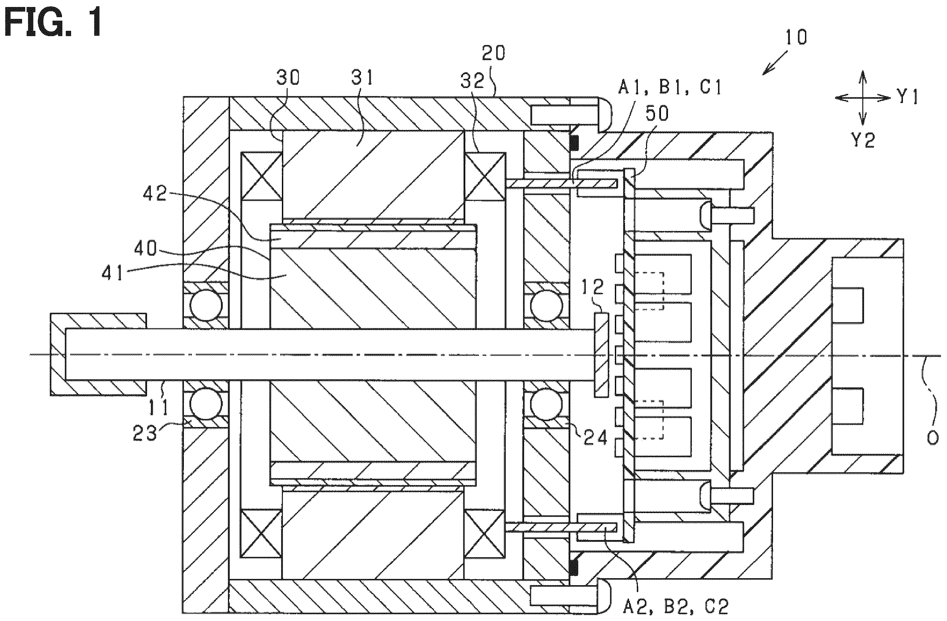

The motor 10 shown in FIG. 1 is of a permanent magnet field type, and specifically, it is a permanent magnet field type synchronous machine with three-phase windings. In other words, the motor 10 is a brushless motor. This motor has two sets of three-phase windings. The motor 10 includes a housing 20, a stator 30 fixed to the housing 20, a rotor 40 that rotates relative to the stator 30, and a rotating shaft 11 to which the rotor 40 is fixed. In the present embodiment, the axial direction refers to the axial direction of the rotating shaft 11 (indicated by arrow Y1 in the drawings). The radial direction refers to the radial direction of the rotating shaft 11 (indicated by arrow Y2 in the drawings). The circumferential direction refers to the circumferential direction of the rotating shaft 11 (indicated by arrow Y3 in the drawings).

The housing 20 is formed in a cylindrical shape, and the stator 30, rotor 40, and other components are housed within the housing 20. Bearings 23 and 24 are provided in the housing 20, and the rotating shaft 11 is rotatably supported by these bearings 23 and 24. The axis of the inner circumferential surface of the housing 20 is coaxial with the rotating shaft 11. An angle sensor 12 is provided on the distal end of the rotating shaft 11. The angle sensor 12 may be either a magnetic sensor or a resolver.

The stator 30 has a cylindrical shape along the inner circumference of the housing 20, approximately at the center of the housing 20 in the axial direction. The stator 30 is fixed to the inner circumferential surface of the housing 20, centered around the axis O of the rotating shaft 11. The stator 30 constitutes a part of a magnetic circuit and includes a stator core 31 (armature core, stator core) having an annular shape, and stator windings 32 (armature windings, armature coil) wound around the stator core 31. The stator core is disposed radially outward of the rotor 40 and faces the rotor 40 in the radial direction.

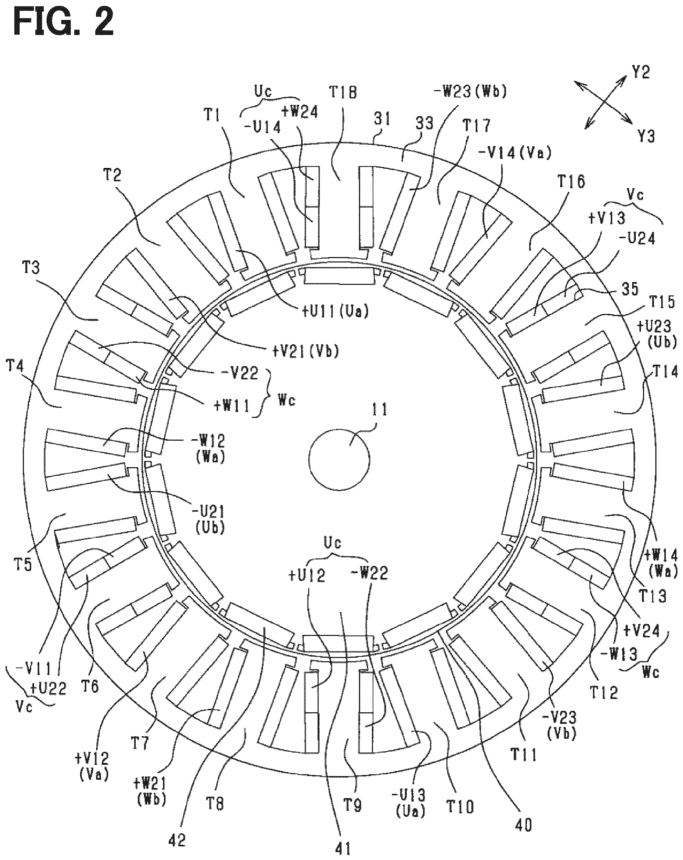

As shown in FIG. 2, the stator core 31 includes a back yoke 33 having an annular shape, and multiple teeth T1 to T18 that protrude radially toward the rotating shaft 11 from the back yoke 33 and are arranged at predetermined intervals in the circumferential direction. Slots 35 (stator slots) are formed between the adjacent teeth T1 to T18. In the stator core 31, the slots 35 are provided at equal intervals in the circumferential direction, and the stator windings 32 are wound in these slots 35. In the present embodiment, the number of teeth T1 to T18 is set to "18," and the number of slots 35 is also set to "18." For the sake of explanation, each of the teeth T1 to T18 is denoted by reference signs T1 to T18 in the circumferential order arranged counterclockwise. The stator windings 32 are housed and held in these slots 35. Then, the stator windings 32 generate magnetic flux when electric power (alternating current power) is supplied.

The stator core 31 is an integrated unit formed by laminating multiple thin steel plates (core sheets) made of a magnetic material in the axial direction of the stator core 31 to form an annular shape. The steel plates are formed by pressing and punching out a strip-shaped electrical steel sheet material.

The rotor 40 constitutes part of the magnetic circuit and has one or multiple pairs of magnetic poles in the circumferential direction. The rotor 40 is arranged to face the stator 30 in the radial direction. In the present embodiment, the rotor 40 has fourteen magnetic poles (i.e., seven pairs of magnetic poles). The rotor 40 includes a rotor core 41 made of a magnetic material and a permanent magnet 42 fixed to the rotor core 41. Specifically, as shown in FIG. 2, the rotor 40 is provided with fourteen permanent magnets 42 serving as magnet portions, with alternating polarity in the circumferential direction. The permanent magnets 42 are embedded in accommodating holes extending in the axial direction of the rotor core 41.

The rotor 40 may have a well-known configuration. For example, it may be an IPM type (Interior Permanent Magnet) rotor, or an SPM type (Surface Permanent Magnet) rotor. Additionally, a field winding type rotor may be employed as the rotor 40. In the present embodiment, an IPM type rotor is employed. The rotor 40 has a rotating shaft 11 inserted through it and is fixed to the rotating shaft 11 so that it rotates integrally with the rotating shaft 11 using the rotating shaft 11 as the rotation center.

The motor 10 is connected to a controller 50. The controller 50 is primarily constituted by a well-known microcomputer equipped with a CPU, ROM, RAM, I/O, and the like. By executing the programs stored in the ROM, the CPU realizes various functions. The various functions may be realized by electronic circuits, which are hardware, or at least partially by software, i.e., processes executed on a computer.

The functions provided by the controller 50 include, for example, a function to convert power from an external source (such as a battery) and supply it to the motor 10 to generate driving force. Additionally, the controller 50 has a function of controlling the motor 10 (such as current control) by utilizing information on the rotational angle that has been input from the angle sensor 12.

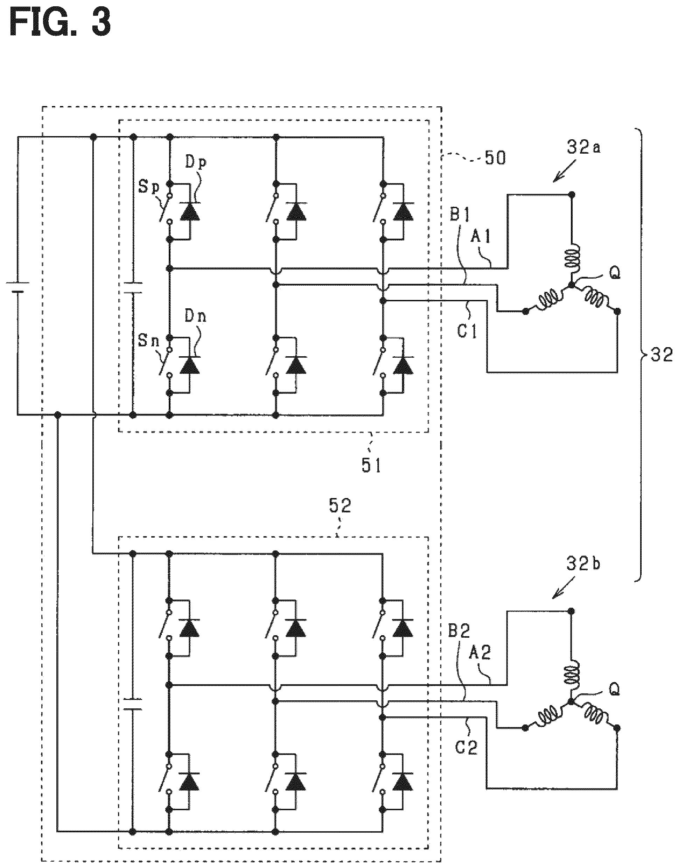

Furthermore, as shown in FIG. 3, the controller 50 includes a first inverter circuit 51 and a second inverter circuit 52. The first inverter circuit 51 is includes a full-bridge circuit having upper and lower arms equal in number to the three phases. The controller 50 controls the current in each phase by turning the switching elements provided in each arm on and off.

Specifically, as shown in FIG. 3, the first inverter circuit 51 includes a series connection of an upper arm switch Sp and a lower arm switch Sn as switching elements in each of the three phases consisting of U phase, V phase, and W phase. In the present embodiment, voltage-controlled semiconductor switching elements are used as the upper arm switch Sp and the lower arm switch Sn in each phase. Specifically, IGBTs are used. MOSFETs may also be used as the switches. Freewheeling diodes (flyback diodes) Dp and Dn are connected in reverse parallel with the upper arm switch Sp and the lower arm switch Sn, respectively, in each phase.

The high-potential side terminal (collector) of the upper arm switch Sp in each phase is connected to the positive terminal of the battery. Additionally, the low-potential side terminal (emitter) of the lower arm switch Sn in each phase is connected to the negative terminal (ground) of the battery. The intermediate connection point between the upper arm switch Sp and the lower arm switch Sn in each phase is connected to one end (lead wire A1, B1, C1) of corresponding stator windings 32. Since the second inverter circuit 52 is similar to the first inverter circuit 51, a detailed explanation will be omitted.

In such a rotating electrical machine, noise and vibration caused by torque ripple may have become issues. Since torque ripple mainly comprises 6th-order or 12th-order harmonic components, it is desirable to suppress these components. Therefore, the configuration is as follows.

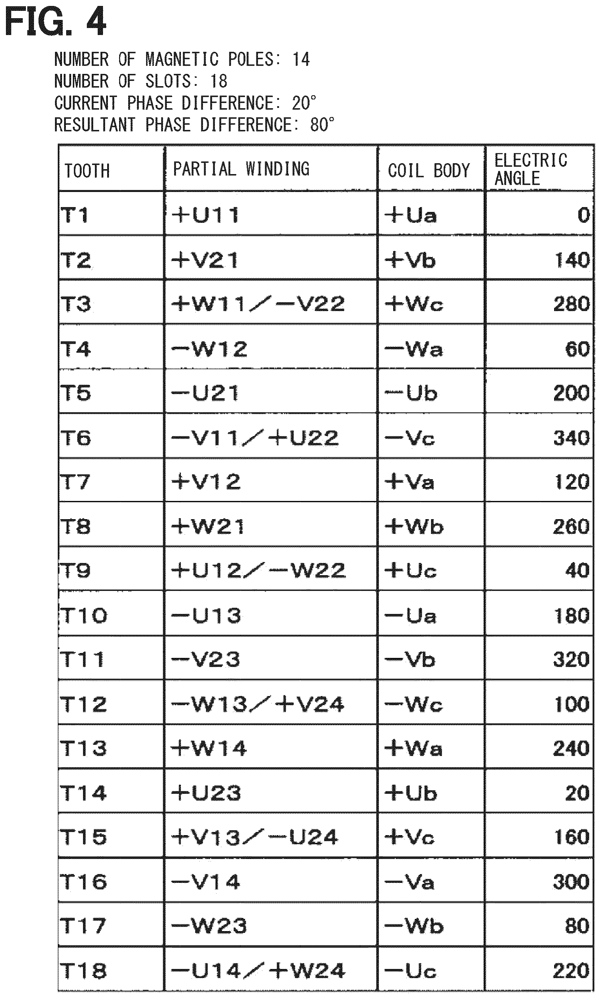

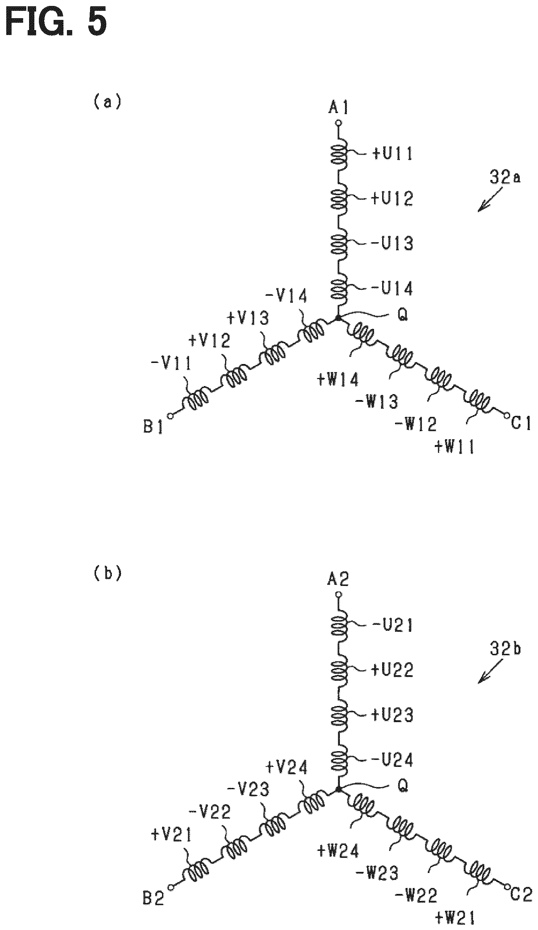

The stator windings 32 are classified into U-phase, V-phase, and W-phase stator windings 32, each representing one of the three phases. As shown in FIG. 4 and FIG. 5, the U-phase stator windings 32 is composed of eight partial windings: +U11, +U12, -U13, -U14, -U21, +U22, +U23, and -U24. The V-phase stator windings 32 is composed of eight partial windings: -V11, +V12, +V13, -V14, +V21, -V22, -V23, and +V24. The W-phase stator windings 32 is composed of eight partial windings: +W11, -W12, -W13, +W14, +W21, -W22, -W23, and +W24.

Furthermore, the twenty four partial windings are arranged in the order of +U11, +V21, +W11/- V22, -W12, -U21, -V11/+U22, +V12, +W21, +U12/-W22, -U13, -V23, -W13/+V24, +W14, +U23, +V13/-U24, -V14, -W23, -U14/+W24, corresponding to the teeth T1 to T18, respectively, as shown in FIG. 2 and FIG. 4.

The "+" and "-" signs indicate the direction of the current, that is, the polarity of the magnetic field generated by the partial windings. For example, in FIG. 2 of the present embodiment, when the current flow from the front side to the back side of the page is denoted as "+", the current flow from the back side to the front side of the page is denoted as "-". In other words, when current flows through the stator windings 32, the "+" partial winding and the "-" partial winding generate magnetomotive forces that are opposite in the radial direction. This means that the "+" partial winding and the "-" partial winding have a magnetomotive force phase difference of 180 degrees in electrical angle. The "+" partial winding and the "-" partial winding can be achieved by winding them in opposite directions. The same applies to the coil body, which will be described later.

In addition, the "/" indicates that two partial windings are arranged at different positions in the radial direction with respect to the same tooth of the teeth T1 to T18. In other words, two partial windings are arranged with respect to teeth T3, T6, T9, T12, T15, and T18. In contrast, one partial winding is arranged with respect to the other teeth T1, T2, T4, T5, T7, T8, T10, T11, T13, T14, T16, and T17. The positions of the partial windings in the radial direction may be interchanged in teeth T3, T6, T9, T12, T15, and T18.

Next, the wiring of the stator windings 32 will be described with reference to FIG. 5. In the present embodiment, a Y-connection (star connection) is used, but a delta connection may also be employed.

As shown in FIG. 5, the stator windings 32 are composed of first stator windings 32a and second stator windings 32b. In the first stator windings 32a, the partial windings +U11, +U12, -U13, and -U14 of the U-phase are connected in series, the partial windings -V11, +V12, +V13, and -V14 of the V-phase are connected in series, and the partial windings +W11, -W12, -W13, and +W14 of the W-phase are connected in series. These series connections have one end connected to the neutral point Q and the other end connected to lead wires A1, B1, and C1 which are connected to the first inverter circuit 51. Specifically, the lead wire A1 is connected to the partial windings of the U-phase, the lead wire B1 is connected to the partial windings of the V-phase, and the lead wire C1 is connected to the partial windings of the W-phase.

Similarly, in the second stator windings 32b, the partial windings -U21, +U22, +U23, and -U24 of the U-phase are connected in series, the partial windings +V21, -V22, -V23, and +V24 of the V-phase are connected in series, and the partial windings +W21, -W22, -W23, and +W24 of the W-phase are connected in series. These series connections have one end connected to the neutral point Q and the other end connected to lead wires A2, B2, and C2 which are connected to the second inverter circuit 52. Specifically, the lead wire A2 is connected to the partial windings of the U-phase, the lead wire B2 is connected to the partial windings of the V-phase, and the lead wire C2 is connected to the partial windings of the W-phase.

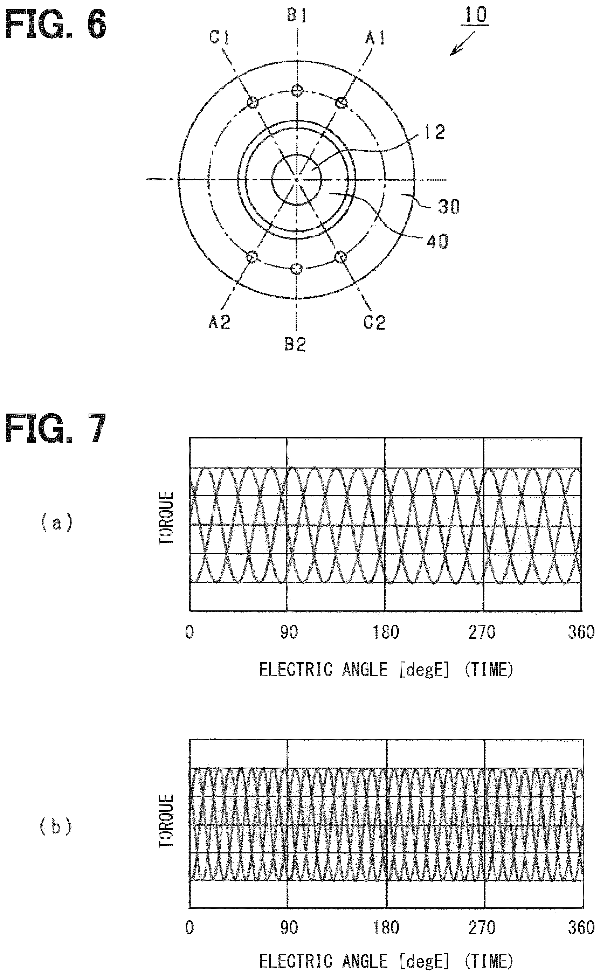

As shown in FIG. 6, the lead wires A1, B1, C1, A2, B2, and C2 are arranged to be point-symmetric about the axis O of the rotating shaft 11. That is, the lead wires A1 and A2 are arranged at 180-degree intervals, the lead wires B1 and B2 are arranged at 180-degree intervals, and the lead wires C1 and C2 are arranged at 180-degree intervals. Additionally, the lead wires A1, B1, C1, A2, B2, and C2 extend in a straight line in the axial direction.

Only the first stator windings 32a are wound (wrapped) around the teeth T1, T4, T7, T10, T13, and T16, and thereby two coil bodies for each phase are provided on these teeth. These U-phase coil bodies are indicated as coil bodies Ua, these V-phase coil bodies are indicated as coil bodies Va, and these W-phase coil bodies are indicated as coil bodies Wa. Hereinafter, the teeth on which only the first stator windings 32a are wound may be referred to as first teeth. In the first embodiment, teeth T1, T4, T7, T10, T13, and T16 correspond to the first teeth.

Additionally, only the second stator windings 32b are wound (wrapped) around teeth T2, T5, T8, T11, T14, and T17, and thereby two coil bodies for each phase are provided to these teeth. These U-phase coil bodies are indicated as coil bodies Ub, these V-phase coil bodies are indicated as coil bodies Vb, and these W-phase coil bodies are indicated as coil bodies Wb. Hereinafter, the teeth on which only the second stator windings 32b are wound may be referred to as second teeth. In the first embodiment, teeth T2, T5, T8, T11, T14, and T17 correspond to the second teeth.

Then, both the first stator windings 32a and the second stator windings 32b are wound around teeth T3, T6, T9, T12, T15, and T18, and thereby two coil bodies for each phase are provided to these teeth. These U-phase coil bodies are indicated as coil bodies Uc, these V-phase coil bodies are indicated as coil bodies Vc, and these W-phase coil bodies are indicated as coil bodies Wc. Hereinafter, the teeth on which the first stator windings 32a and the second stator windings 32b are wound may be referred to as third teeth. In the first embodiment, teeth T3, T6, T9, T12, T15, and T18 correspond to the third teeth.

As shown in FIG. 2, the coil bodies Ua, Va, Wa, Ub, Vb, Wb, Uc, Vc, and Wc of each phase are arranged in a two-fold rotational symmetry around the axis of the rotating shaft 11. In other words, even when rotated 180 degrees in mechanical angle around the axis, the arrangement order of the coil bodies Ua, Va, Wa, Ub, Vb, Wb, Uc, Vc, and Wc remains the same.

Here, a magnetomotive force Fu1a of the partial windings +U11, +U12, a magnetomotive force Fu1b of the partial windings -U13, -U14, a magnetomotive force Fu2a of the partial windings +U22, +U23, and a magnetomotive force Fu2b of the partial windings -U21, -U24 can be expressed by the equations (1) to (4). Here, "θ" is a phase of current flowing through the stator windings 32 and based on a phase of U-phase current supplied from the first inverter circuit 51. "β" is a phase difference between the current supplied from the first inverter circuit 51 and the current supplied from the second inverter circuit 52 (hereinafter sometimes referred to as the current phase difference). Additionally, "N" is the number of turns of each partial winding. "I" is the amplitude of the current.

Math 1

$$Fu1a = N \times I \times \sin(\theta) \,...\,(1)$$

$$Fu1b = N \times I \times \sin(\theta - 180°) \,...\,(2)$$

$$Fu2a = N \times I \times \sin(\theta - \beta) \,...\,(3)$$

$$Fu2b = N \times I \times \sin(\theta - 180° - \beta) \,...\,(4)$$

Similarly, a magnetomotive force Fv1a of the partial windings +V12, +V13, a magnetomotive force Fv1b of the partial windings -V11, -V14, a magnetomotive force Fv2a of the partial windings +V21, +V24, and a magnetomotive force Fv2b of the partial windings -V22, -V23 can be expressed by the equations (5) to (8).

Math 2

$$Fv1a = N \times I \times \sin(\theta - 120°) \,...\,(5)$$

$$Fv1b = N \times I \times \sin(\theta - 300°) \,...\,(6)$$

$$Fv2a = N \times I \times \sin(\theta - 120° - \beta) \,...\,(7)$$

$$Fv2b = N \times I \times \sin(\theta - 300° - \beta) \,...\,(8)$$

Similarly, a magnetomotive force Fw1a of the partial windings +W11, +W14, a magnetomotive force Fw1b of the partial windings -W12, -W13, a magnetomotive force Fw2a of the partial windings +W21, +W24, and a magnetomotive force Fw2b of the partial windings -W22, -W23 can be expressed by the equations (9) to (12).

Math 3

$$Fw1a = N \times I \times \sin(\theta - 240°) \dots (9)$$

$$Fw1b = N \times I \times \sin(\theta - 420°) = N \times I \times \sin(\theta - 60°) \dots (10)$$

$$Fw2a = N \times I \times \sin(\theta - 240° - \beta) \dots (11)$$

$$Fw2b = N \times I \times \sin(\theta - 420° - \beta) = N \times I \times \sin(\theta - 60° - \beta) \dots (12)$$

Then, the 6th harmonic component "Tr6" of torque in each phase can be expressed by the equation (13). Additionally, the 12th harmonic component "Tr12" of torque in each phase can be expressed by the equation (14).

Math 4

$$Tr6 = Ta \times \sin 6(\theta + \alpha) + Tb \times \sin 6(\theta + \alpha - \lambda1) + Tc \times \sin 6(\theta + \alpha - \lambda2) \dots (13)$$

$$Tr12 = Ta \times \sin 12(\theta + \alpha) + Tb \times \sin 12(\theta + \alpha - \lambda1) + Tc \times \sin 12(\theta + \alpha - \lambda2) \dots (14)$$

In the equations (13) and (14), a is a constant and depends on factors such as noise. Furthermore, in the first embodiment, the first term of the equations (13) and (14) corresponds to a component based on the coil bodies Ua, Va, and Wa, the second term corresponds to a component based on the coil bodies Ub, Vb, and Wb, and the third term corresponds to a component based on the coil bodies Uc, Vc, and Wc.

Additionally, in the U phase, "λ1" represents a phase difference between a magnetomotive force of the coil body Ua and a magnetomotive force of the coil body Ub. In other words, "λ1" indicates the phase lag of the magnetomotive force of coil body Ub relative to the magnetomotive force of coil body Ua, which is used as the reference. Similarly, in the V phase, "λ1" indicates a phase difference between a magnetomotive force of the coil body Va and a magnetomotive force of the coil body Vb. In the W phase, "λ1" indicates a phase difference between a magnetomotive force of the coil body Wa and a magnetomotive force of the coil body Wb. Similarly, in the U phase, "λ2" indicates a phase difference between the magnetomotive force of the coil body Ua and a magnetomotive force of the coil body Uc. In the V phase, "λ2" indicates a phase difference between the magnetomotive force of the coil body Va and a magnetomotive force of the coil body Vc. In the W phase, "λ2" indicates a phase difference between the magnetomotive force of the coil body Wa and a magnetomotive force of the coil body Wc. Additionally, in the equations (13) and (14), "Ta" is a constant that is proportional to the number of turns and the amplitude of the current of the coil bodies Ua, Va, and Wa. Additionally, "Tb" is a constant that is proportional to the number of turns and the amplitude of the current of the coil bodies Ub, Vb, and Wb. Additionally, "Tc" is a constant that is proportional to the number of turns and the amplitude of the current of the coil bodies Uc, Vc, and Wc.

Here, in the case where "λ1" and "λ2" are 20 degrees and 40 degrees in electrical angle, respectively, and "Ta," "Tb," and "Tc" are the same, it can be understood that each harmonic component of the torque is canceled, as shown in the equations (15), (16), and FIG. 7.

Math 5

$$Tr6 = Ta \times \sin 6(\theta + \alpha) + Ta \times \sin 6(\theta + \alpha - 20°) + Ta \times \sin 6(\theta + \alpha - 40°)$$
$$= Ta \times \sin 6(\theta + \alpha) + Ta \times \sin\{6(\theta + \alpha) - 120°\} + Ta \times \sin\{6(\theta + \alpha) - 240°\}$$
$$= 0 \dots (15)$$
$$Tr12 = Ta \times \sin 12(\theta + \alpha) + Ta \times \sin 12(\theta + \alpha - 20°) + Ta \times \sin 12(\theta + \alpha - 40°)$$
$$= Ta \times \sin 12(\theta + \alpha) + Ta \times \sin\{12(\theta + \alpha) - 120°\} + Ta \times \sin\{12(\theta + \alpha) - 240°\}$$
$$= 0 \dots (16)$$

In the present embodiment, the current phase difference "β" between the first inverter circuit 51 and the second inverter circuit 52 is set to 20 degrees in electrical angle. In other words, the phase difference between the magnetomotive force of the coil bodies Ua, Va, Wa and the magnetomotive force of the coil bodies Ub, Vb, Wb is 20 degrees, making "λ1" equal to 20 degrees. Therefore, if the phase difference between the magnetomotive force of the coil bodies Ua, Va, Wa and the magnetomotive force of the coil bodies Uc, Vc, Wc is set to 40 degrees, it can be said that torque ripple can be reduced.

As a result, the phase difference between the magnetomotive force of the coil bodies Ua, Va, Wa and the magnetomotive force of the coil bodies Ub, Vb, Wb, as well as the phase difference between the magnetomotive force of the coil bodies Ub, Vb, Wb and the magnetomotive force of the coil bodies Uc, Vc, Wc, may each be set to 20 degrees. While a phase difference of 20 degrees is desirable, a predetermined phase range that includes 20 degrees (for example, a range of 15 to 25 degrees) is also acceptable, and even in this case, the effect of reducing torque ripple can be achieved.

Therefore, in this embodiment, the phase difference between the magnetomotive force generated by the partial winding of the first stator windings 32a and the magnetomotive force generated by the partial winding of the second stator windings 32b, which are wound on each of the third teeth, is set within the range of 72 to 88 electrical degrees. Accordingly, the phase difference between the magnetomotive force of the coil bodies Ua, Va, Wa and the magnetomotive force of the coil bodies Uc, Vc, Wc can be set to 40 degrees (i.e., the phase difference between the magnetomotive force of the coil bodies Ub, Vb, Wb and the magnetomotive force of the coil bodies Uc, Vc, Wc can be set to 20 degrees). In the following, the phase difference in magnetomotive force between the partial winding of the second stator windings 32b and the partial winding of the first stator windings 32a, which are wound on each of the third teeth, may be referred to as a resultant phase difference.

Although the resultant phase difference is set within the range of 72 to 88 electrical degrees, it is preferable to set it to 80 degrees. In this embodiment, the resultant phase difference is set to 80 degrees.

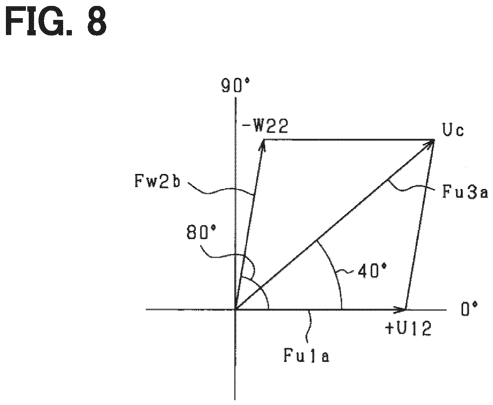

Sum of magnetomotive forces will be explained in detail using a coil body Uc, which is provided on a tooth T9, one of the third teeth, as an example. As shown in FIG. 2 and FIG. 4, the coil body Uc provided on the tooth T9 is composed of partial windings +U12/-W22. The magnetomotive force Fu1a of the partial winding +U12 and the magnetomotive force Fw2b of the partial winding -W22 are as shown in the equations (1) and (12). When these magnetomotive forces are represented in a vector diagram, they appear as shown in FIG. 8. Then, when the magnetomotive force Fu1a of the partial winding +U12 and the magnetomotive force Fw2b of the partial winding -W22 are summed, they result as shown in the equation (17).

Math 6

$$
\begin{aligned}
Fu3a &= Fu1a + Fw2b \\
&= N \times I \times \sin(\theta) + N \times I \times \sin(\theta - 80°) \\
&= 1.53 \times N \times I \times \sin(\theta - 40°) \ ... (17)
\end{aligned}
$$

In the equation (17), the number of turns of the partial winding +U12 and the number of turns of the partial winding -W22 are both represented as N. As shown in the equation (17), by winding the partial winding +U12 and the partial winding -W22 around the tooth T9, it is possible to achieve the magnetomotive forces of the coil bodies Uc, Vc, and Wc, which have a phase difference of 40 degrees relative to the magnetomotive forces of the coil bodies Ua, Va, and Wa.

As shown in the equation (17), the magnetomotive force is proportional to the number of turns of the partial winding. Therefore, if the number of turns of each partial winding is not set appropriately, the amplitudes of the magnetomotive forces will not be uniform among the coil bodies Ua, Va, Wa, Ub, Vb, Wb, Uc, Vc, and Wc. In other words, variations will occur in the constants "Ta," "Tb," and "Tc" in the equations (13) and (14). If the amplitudes of the magnetomotive forces are not uniform, the torque ripple cancellation effect will be diminished. Therefore, it is desirable to set the number of turns such that the amplitudes of the magnetomotive forces of the coil bodies Ua, Va, Wa, Ub, Vb, Wb, Uc, Vc, and Wc fall within a predetermined amplitude range.

Therefore, in this embodiment, in order to align the magnetomotive forces of the coil bodies Ua, Va, Wa with those of the coil bodies Ub, Vb, Wb, the number of turns for both coil bodies Ua, Va, Wa and coil bodies Ub, Vb, Wb is set to the same number of turns "Na".

Furthermore, the number of turns of the first stator windings 32a and the number of turns of the second stator windings 32b, which are wound on each of the third teeth, are set so that the magnetomotive forces of the coil bodies Ua, Va, Wa, Ub, Vb, Wb, Uc, Vc, and Wc of each phase are approximately equal.

Specifically, the number of turns of the first stator windings 32a and the number of turns of the second stator windings 32b, which are wound around each of the third teeth, are "Nb", and the number of turns "Na" and "Nb" are set to satisfy the relationship $1.4 \leq Na/Nb \leq 1.6$. It is preferable that Na/Nb be a value close to 1.53. In this embodiment, the number of turns is set so that the ratio of Na to Nb is 3:2 (Na/Nb = 1.5).

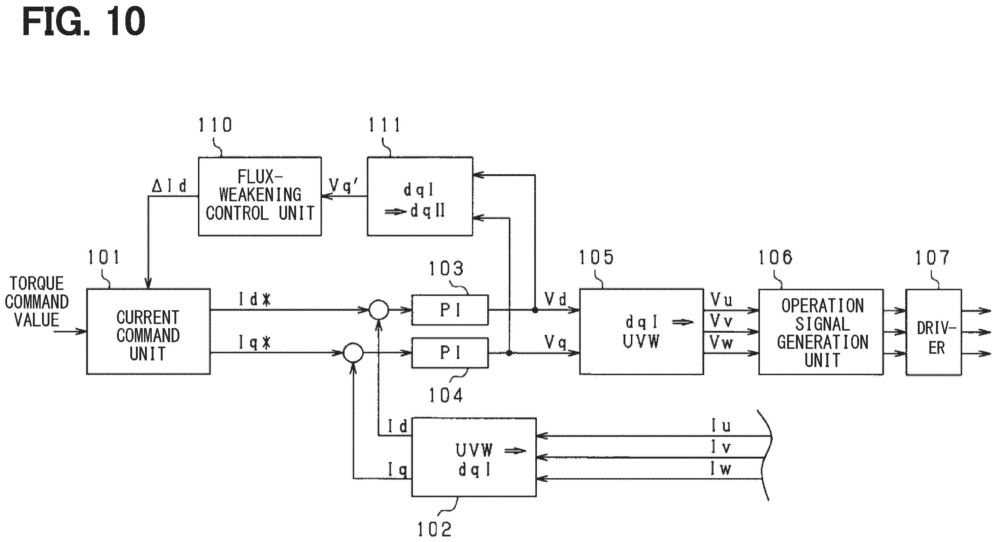

Next, the control of the motor 10 in the first embodiment will be described. FIG. 10 illustrates the control process for controlling the phase currents of the U, V, and W phases. Note that the current control for the first stator windings 32a (control of the first inverter circuit 51) and the current control for the second stator windings 32b (control of the second inverter circuit 52) are both implemented in the same manner.

The control process is implemented by the controller 50 (CPU) executing the program stored in the ROM. The various functions of the controller 50 (current command unit 101, dq conversion unit 102, d-axis current feedback control unit 103, q-axis current feedback control unit 104, two-phase to three-phase conversion unit 105, operation signal generation unit 106, flux-weakening control unit 110) are realized by the controller 50 (CPU) executing the program stored in the ROM. All or part of the various functions realized by the controller 50 may also be implemented in hardware.

The current command unit 101 sets a d-axis current command value Id* and a q-axis current command value Iq* based on factors such as a torque command value for the motor 10 (powering torque command value or power generation torque command value), a flux-weakening current ΔId input by the flux-weakening control unit 110, and a rotational speed ω (electrical angular velocity) obtained by time-differentiating the rotational electrical angle of the motor 10, using a torque-dq conversion map. The torque command value is transmitted form a higher-level control unit or the like. Details regarding the flux-weakening current ΔId input from the flux-weakening control unit 110 will be described later.

The dq conversion unit 102 converts a current detection value (phase current Iu1, Iv1, Iw1, Iu2, Iv2, Iw2) of each of the three phases (U, V, W phases) detected by a current sensor provided for each phase into a d-axis current (Id1, Id2) and a q-axis current (Iq1, Iq2), which are components in an orthogonal two-dimensional rotating coordinate system. In the first embodiment, the dq conversion unit 102 corrects a current phase difference and performs coordinate conversion such that the d-axis current Id1 of the first stator windings 32a matches the d-axis current Id2 of the second stator windings 32b, and the q-axis current Iq1 of the first stator windings 32a matches the q-axis current Iq2 of the second stator windings 32b. Specifically, the conversion is performed as shown in the following equations (18) and (19).

Math 7

$$\begin{pmatrix} I_{d1} \\ I_{q1} \end{pmatrix} = \sqrt{\frac{2}{3}} \begin{pmatrix} \cos\left(\theta + \frac{\beta}{2}\right) & \cos\left(\theta + 120° + \frac{\beta}{2}\right) & \cos\left(\theta + 240° + \frac{\beta}{2}\right) \\ -\sin\left(\theta + \frac{\beta}{2}\right) & -\sin\left(\theta + 120° + \frac{\beta}{2}\right) & -\sin\left(\theta + 240° + \frac{\beta}{2}\right) \end{pmatrix} \begin{pmatrix} I_{u1} \\ I_{v1} \\ I_{w1} \end{pmatrix} \dots (18)$$

$$\begin{pmatrix} I_{d2} \\ I_{q2} \end{pmatrix} = \sqrt{\frac{2}{3}} \begin{pmatrix} \cos\left(\theta - \frac{\beta}{2}\right) & \cos\left(\theta + 120° - \frac{\beta}{2}\right) & \cos\left(\theta + 240° - \frac{\beta}{2}\right) \\ -\sin\left(\theta - \frac{\beta}{2}\right) & -\sin\left(\theta + 120° - \frac{\beta}{2}\right) & -\sin\left(\theta + 240° - \frac{\beta}{2}\right) \end{pmatrix} \begin{pmatrix} I_{u2} \\ I_{v2} \\ I_{w2} \end{pmatrix} \dots (19)$$

Here, "Id1" refers to a d-axis current of the first stator windings 32a in a first dq-axis coordinate system, and "Iq1" refers to a q-axis current of the first stator windings 32a in the first dq-axis coordinate system. "Iu1" refers to a U-phase current (current detection value) in the first stator windings 32a, "Iv1" refers to a V-phase current (current detection value) in the first stator windings 32a, and "Iw1" refers to a W-phase current (current detection value) in the first stator windings 32a. Furthermore, "Id2" refers to a d-axis current of the second stator windings 32b in the first dq-axis coordinate system, and "Iq2" refers to a q-axis current of the second stator windings 32b in the first dq-axis coordinate system. "Iu2" refers to a U-phase current (current detection value) in the second stator windings 32b, "Iv2" refers to a V-phase current (current detection value) in the second stator windings 32b, and "Iw2" refers to a W-phase current (current detection value) in the second stator windings 32b. Furthermore, "β" is the current phase difference, as mentioned earlier, and in the first embodiment, "β" is "20°".

By performing the conversion as shown in the equations (18) and (19), the current phase difference can be corrected, resulting in Id1 = Id2 and Iq1 = Iq2 in the first dq-axis coordinate system. As a result, the controller 50 is capable of controlling the current of the first stator windings 32a and the current of the second stator windings 32b in the same manner.

Converting each phase current into d-axis current and q-axis current to correct the current phase difference is referred to as "converting each phase current into the first dq-axis coordinate system". In FIG. 10, this is indicated as "UVW → dqI". This dq conversion unit 102 corresponds to a current conversion unit. Additionally, the d-axis current Id1 and the d-axis current Id2 may collectively be referred to as a d-axis current Id. The q-axis current Iq1 and the q-axis current Iq2 may collectively be referred to as a q-axis current Iq.

The d-axis current feedback control unit 103 calculates a corrected command amount, i.e., d-axis command voltages Vd1, Vd2, by applying a PI (Proportional-Integral) gain to a deviation amount between the d-axis current Id and the d-axis current command value Id*. The d-axis command voltages Vd1, Vd2 are an operating amount for feedback controlling the d-axis current Id to the d-axis current command value Id*. The d-axis command voltages Vd1 and Vd2 are values in the first dq-axis coordinate system and may collectively be referred to as Vd. Additionally, the d-axis command voltage may also be referred to as a d-axis voltage.

The q-axis current feedback control unit 104 of the controller 50 calculates a corrected command amount, i.e., q-axis command voltages Vq1, Vq2, by applying a PI gain to a deviation amount between the q-axis current Iq and the q-axis current command value Iq*. The q-axis command voltages Vq1, Vq2 are an operating amount for feedback controlling the q-axis current Iq to the q-axis current command value Iq*. The q-axis command voltages Vq1, Vq2 are values in the first dq-axis coordinate system and may collectively be referred to as Vq. Additionally, the q-axis command voltage may also be referred to as a q-axis voltage. The d-axis current feedback control unit 103 and the q-axis current feedback control unit 104 correspond to a command voltage determination unit.

The two-phase to three-phase conversion unit 105 converts the d-axis command voltage Vd and the q-axis command voltages Vq in the first dq-axis coordinate system into U-phase, V-phase, and W-phase command voltages (Vu1, Vv1, Vw1, Vu2, Vv2, Vw2). In FIG. 10, this is indicated as "dql → UVW". The equations for converting from the U-phase voltage, V-phase voltage, and W-phase voltage to the d-axis voltage and q-axis voltage are shown in equations (20) and (21). The two-phase to three-phase conversion unit 105 performs inverse conversion of these conversion, thereby converting the d-axis and q-axis command voltages into the U-phase, V-phase, and W-phase command voltages.

Math 8

$$\begin{pmatrix} V_{d1} \\ V_{q1} \end{pmatrix} = \sqrt{\frac{2}{3}} \begin{pmatrix} \cos\left(\theta + \frac{\beta}{2}\right) & \cos\left(\theta + 120° + \frac{\beta}{2}\right) & \cos\left(\theta + 240° + \frac{\beta}{2}\right) \\ -\sin\left(\theta + \frac{\beta}{2}\right) & -\sin\left(\theta + 120° + \frac{\beta}{2}\right) & -\sin\left(\theta + 240° + \frac{\beta}{2}\right) \end{pmatrix} \begin{pmatrix} V_{u1} \\ V_{v1} \\ V_{w1} \end{pmatrix} \dots (20)$$

$$\begin{pmatrix} V_{d2} \\ V_{q2} \end{pmatrix} = \sqrt{\frac{2}{3}} \begin{pmatrix} \cos\left(\theta - \frac{\beta}{2}\right) & \cos\left(\theta + 120° - \frac{\beta}{2}\right) & \cos\left(\theta + 240° - \frac{\beta}{2}\right) \\ -\sin\left(\theta - \frac{\beta}{2}\right) & -\sin\left(\theta + 120° - \frac{\beta}{2}\right) & -\sin\left(\theta + 240° - \frac{\beta}{2}\right) \end{pmatrix} \begin{pmatrix} V_{u2} \\ V_{v2} \\ V_{w2} \end{pmatrix} \dots (21)$$

Here, "Vd1" is a d-axis voltage (d-axis command voltage) of the first stator windings 32a in the first dq-axis coordinate system, and "Vq1" is a q-axis voltage (q-axis command voltage) of the first stator windings 32a in the first dq-axis coordinate system. Additionally, "Vu1" is a U-phase voltage (U-phase command voltage) of the first stator windings 32a, "Vv1" is a V-phase voltage (V-phase command voltage) of the first stator windings 32a, and "Vw1" is a W-phase voltage (W-phase command voltage) of the first stator windings 32a. Additionally, "Vd2" is a d-axis voltage (d-axis command voltage) of the second stator windings 32b in the first dq-axis coordinate system, and "Vq2" is a q-axis voltage (q-axis command voltage) of the second stator windings 32b in the first dq-axis coordinate system. Additionally, "Vu2" is a U-phase voltage (U-phase command voltage) of the second stator windings 32b, "Vv2" is a V-phase voltage (V-phase command voltage) of the second stator windings 32b, and "Vw2" is a W-phase voltage (W-phase command voltage) of the second stator windings 32b. Furthermore, "β" is the current phase difference, as mentioned earlier, and in the first embodiment, "β" is "20°". Converting each phase voltage into d-axis voltage and q-axis voltage to correct the current phase difference is referred to as "converting each phase voltage into the first dq-axis coordinate system".

In other words, the two-phase to three-phase conversion unit 105 of the first embodiment converts the d-axis voltage and the q-axis command voltage in the first dq-axis coordinate system into U-phase, V-phase, and W-phase command voltages in the three-phase coordinate system.

Then, the operation signal generation unit 106 of the controller 50 generates operation signals for the inverter based on the three-phase command voltages using a well-known triangular wave carrier comparison method. Specifically, the operation signal generation unit 106 generates switch operation signals (duty signals) for the upper and lower arms in each phase by PWM control. The PWM control is based on comparison of the magnitude between a signal obtained by normalizing the three-phase command voltages with a power supply voltage and a carrier signal (carrier wave) such as a triangle wave signal. The driver 107 of the controller 50 turns the switches Sp and Sn of each 3-phase on and off in the first inverter circuit 51 and the second inverter circuit 52 based on the switch operation signals generated by the operation signal generation unit 106.

In the motor 10 of the first embodiment described above, the adoption of flux-weakening control is planned. The flux-weakening control is a control for achieving an equivalent flux-weakening effect by reducing the d-axis flux. This is achieved by applying a negative d-axis current to utilize the demagnetizing effect due to a d-axis armature reaction.

Here, the details of the flux-weakening control will be explained. The voltage equations of the motor 10 are shown in the equations (22) and (23). In the equations (22) and (23), "Id" represents the d-axis current, "Iq" represents the q-axis current, "Vd" represents the d-axis voltage, and "Vq" represents the q-axis voltage. Additionally, "R" represents a resistance value of the motor 10, "Ld" represents a d-axis inductance, "Lq" represents a q-axis inductance, "ω" represents a rotational speed of the motor 10, and "Φa" represents a magnetic flux of a magnet. Additionally, a terminal voltage "Vt" of the motor 10 is shown in the equation (24).

Math 9

$$Vd = R \times Id + \omega \times Ld \times Iq \, ... \, (22)$$

$$Vq = R \times Iq + \omega \times Lq \times Id + \omega \times \Phi a \, ... \, (23)$$

$$Vt^2 = Vd^2 + Vq^2 \, ... \, (24)$$

As shown in the above equations (22) to (24), it can be understood that as the rotational speed ω of the motor 10 increases, the terminal voltage Vt of the motor 10 also increases. The applied voltage to the motor 10 has an upper limit value Vmax, and if the terminal voltage Vt exceeds this upper limit value Vmax, the motor 10 cannot be driven. In other words, the motor 10 becomes uncontrollable. Therefore, in order to prevent the terminal voltage Vt from exceeding the upper limit value Vmax, it is necessary to flow the negative d-axis current Id and reduce the q-axis voltage Vq according to the rotational speed ω (operating rotational speed). Therefore, in the flux-weakening control, the q-axis voltage Vq is monitored, and the d-axis current Id is determined in such a way that the terminal voltage Vt does not exceed the upper limit value Vmax.

Meanwhile, in the first embodiment, each third tooth (teeth T3, T6, T9, T12, T15, T18) is wound with the first stator windings 32a and the second stator windings 32b, thereby pseudo-forming the coil bodies Uc, Vc, Wc equivalent to the coil bodies Ua, Va, Wa, Ub, Vb, Wb. In this configuration, it has been discovered that the current phase difference and a voltage phase difference do not match, making it impossible to appropriately perform the flux-weakening control.

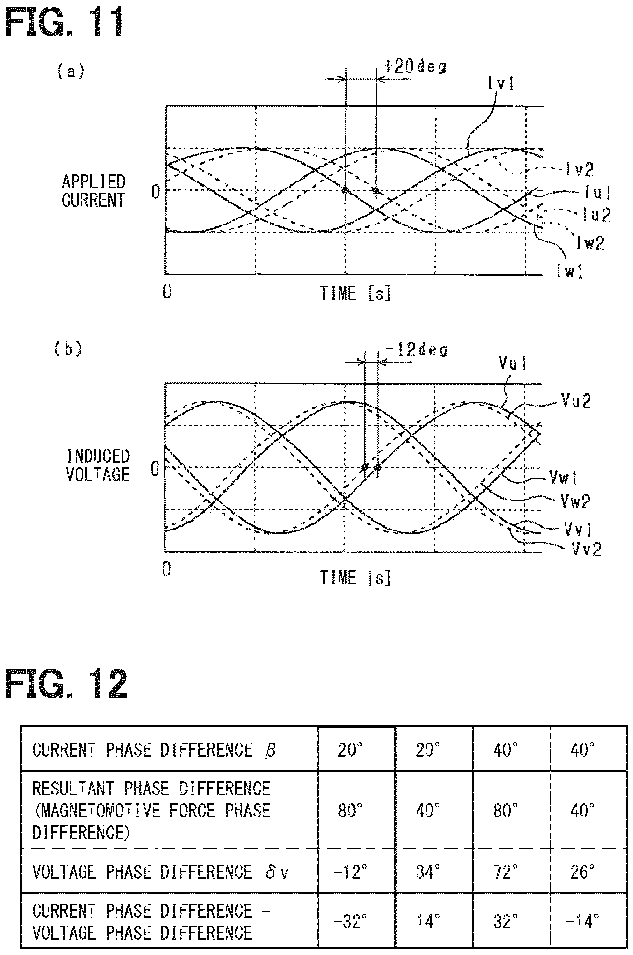

To explain in detail, as shown in FIG. 11(a), the current phase difference of each phase is "20°". However, when coil bodies Uc, Vc, Wc are pseudo-formed, it has been found that, as shown in FIG. 11(b), the phase difference between each phase voltage (induced voltage) of the first stator windings 32a and each phase voltage (induced voltage) of the second stator windings 32b is different from the current phase difference of each phase. Specifically, as shown in FIGS. 11 and 12, when the current phase difference is "20°" and the resultant phase difference is "80°", the voltage phase difference "δv" becomes "-12°".

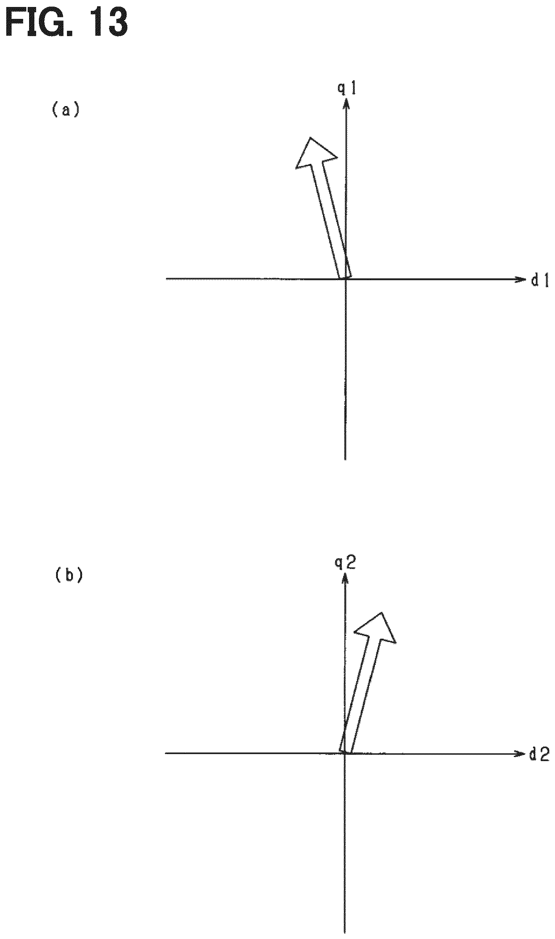

Therefore, when converting each phase voltage to the first dq-axis coordinate system, as shown in FIG. 13(a), the current axis (indicated by the hollow arrow) and the q-axis voltage Vq1 of the first stator windings 32a become misaligned in the first dq-axis coordinate system due to the difference between the current phase difference of "20°" and the voltage phase difference of "-12°". Similarly, as shown in FIG. 13(b), in the first dq-axis coordinate system, the current axis and the q-axis voltage Vq2 of the second stator windings 32b become misaligned. As a result, in the first dq-axis coordinate system, Vd1 and Vd2 no longer align, and Vq1 and Vq2 no longer align.

Due to the impact of this misalignment, for example, in the first dq-axis coordinate system, the q-axis voltage Vq1 will be calculated as lower than its actual value. Then, when the q-axis voltage is calculated as lower than its actual value, this may result in a situation where appropriate flux-weakening control cannot be implemented. For example, even if the actual q-axis voltage reaches a level where a negative d-axis current must flow, the negative d-axis current will not flow. If appropriate flux-weakening control cannot be implemented, the current may oscillate, potentially causing vibrations and other issues. Additionally, the rotational speed may not be properly increased.

Thus, In the motor 10 of the first embodiment, when implementing first embodiment, the coordinate conversion is performed, in which the voltage phase difference is corrected. In detail, a voltage coordinate conversion unit 111 obtains the d-axis command voltage Vd1 and the q-axis command voltage Vq1 (command voltages in the first dq-axis coordinate system) from the d-axis current feedback control unit 103 and the q-axis current feedback control unit 104. Then, the voltage coordinate conversion unit 111 performs a coordinate conversion into a second dq-axis coordinate system, thereby correcting the voltage phase difference. Specifically, the coordinate conversion is performed as shown in the following equation (25).

Math 10

$$\begin{pmatrix} V_{d1}' \\ V_{q1}' \end{pmatrix} = \begin{pmatrix} \cos\left(\dfrac{\delta_v}{2} - \dfrac{\beta}{2}\right) & \sin\left(\dfrac{\delta_v}{2} - \dfrac{\beta}{2}\right) \\ -\sin\left(\dfrac{\delta_v}{2} - \dfrac{\beta}{2}\right) & \cos\left(\dfrac{\delta_v}{2} - \dfrac{\beta}{2}\right) \end{pmatrix} \begin{pmatrix} V_{d1} \\ V_{q1} \end{pmatrix} \, ... \, (25)$$

$$\begin{pmatrix} V_{d2}' \\ V_{q2}' \end{pmatrix} = \begin{pmatrix} \cos\left(-\dfrac{\delta_v}{2} + \dfrac{\beta}{2}\right) & \sin\left(-\dfrac{\delta_v}{2} + \dfrac{\beta}{2}\right) \\ -\sin\left(-\dfrac{\delta_v}{2} + \dfrac{\beta}{2}\right) & \cos\left(-\dfrac{\delta_v}{2} + \dfrac{\beta}{2}\right) \end{pmatrix} \begin{pmatrix} V_{d2} \\ V_{q2} \end{pmatrix} \, ... \, (26)$$

Where, "β" represents the current phase difference, which is "20°" in the first embodiment. Additionally, "δv" represents the voltage phase difference. In the first embodiment, as shown in FIG. 12, the current phase difference is "20°" and the resultant phase difference is "80°". Therefore, the voltage phase difference "$\delta v$" is "-12°". "Vd1'" is the d-axis voltage (d-axis command voltage) of the first stator windings 32a in the second dq-axis coordinate system, and "Vd2'" is the d-axis voltage (d-axis command voltage) of the second stator windings 32b in the second dq-axis coordinate system. "Vq1'" is the q-axis voltage (q-axis command voltage) of the first stator windings 32a in the second dq-axis coordinate system, and "Vq2'" is the q-axis voltage (q-axis command voltage) of the second stator windings 32b in the second dq-axis coordinate system. By performing this conversion, the q-axis voltage Vq1' and the q-axis voltage Vq2' become equal.

The d-axis command voltage Vd2 and the q-axis command voltage Vq2 (command voltages in the first dq-axis coordinate system) can be obtained and converted in coordination as shown in the equation (26). Since the q-axis voltages in the second dq-axis coordinate system are the same (Vq1' = Vq2'), the result will be the same regardless of which value is adopted.

Then, the flux-weakening control unit 110 calculates a flux-weakening current $\Delta$Id (negative d-axis current) based on the q-axis voltage Vq' (Vq1' or Vq2') in the second dq-axis coordinate system. Specifically, the flux-weakening control unit 110 monitors the q-axis voltage Vq' in the second dq-axis coordinate system and determines the flux-weakening current $\Delta$Id so that the terminal voltage Vt does not exceed the upper limit value Vmax. The method for determining the flux-weakening current $\Delta$Id may be calculated through computation or specified using a map. The flux-weakening current $\Delta$Id is expressed as a value in the first dq-axis coordinate system.

As described above, the current command unit 101 sets the d-axis current command value and the q-axis current command value based on the torque command value, the flux-weakening current $\Delta$Id input by the flux-weakening control unit 110, and the rotational speed $\omega$, for example. The subsequent process is omitted as it is as described above.

As described above, the configuration of the first embodiment has the following effects.

The flux-weakening control unit 110 monitors the q-axis voltage Vq1' (or Vq2') in the second dq-axis coordinate system, which is used for correction of the voltage phase difference, and determines the flux-weakening current accordingly. Since the voltage phase difference has been corrected, the difference between the calculated q-axis voltage Vq1' (or Vq2') and the actual value is eliminated, enabling implementation of the appropriate flux-weakening control. As a result, current oscillation can be reduced, and the rotational speed can be appropriately increased. Furthermore, since the flux-weakening current $\Delta$Id is output as a value in the first dq-axis coordinate system, the processing by the current command unit 101 is simplified.

The phase differences between the magnetomotive forces of the coil bodies Ua, Va, Wa and those of the coil bodies Ub, Vb, Wb, as well as the phase differences between the magnetomotive forces of the coil bodies Ub, Vb, Wb and those of the coil bodies Uc, Vc, Wc, are set to be within a predetermined phase range that includes 20 degrees. Specifically, the phase difference (resultant phase difference) between the magnetomotive force generated by the partial windings of the second stator windings 32b wound around each of the third teeth and the magnetomotive force generated by the partial windings of the first stator windings 32a wound around the same third teeth is set to be within the range of 72 to 88 electrical degrees. In this embodiment, the resultant phase difference is set to be 80 degrees. As a result, as shown in the equations (15) to (17), it is possible to cancel out the 6th or 12th harmonic components of the torque and reduce torque ripple.

The number of turns of each partial winding is set such that the magnetomotive forces of the coil bodies Ua, Va, Wa, Ub, Vb, Wb, Uc, Vc, Wc are within a predetermined amplitude range (in this embodiment, approximately the same). Specifically, if the number of turns of the first stator windings 32a wound around the first tooth is denoted as "Na," then the number of turns of the second stator windings 32b wound around the second tooth is also set to "Na." Then, when the number of turns of the first stator windings 32a and the second stator windings 32b wound around the third tooth are each denoted as "Nb," the number of turns is set such that the relationship $1.4 \leq Na/Nb \leq 1.6$ is satisfied. In this embodiment, the number of turns is set such that the ratio of Na:Nb is 3:2 (Na/Nb is 1.5). As a result, the amplitudes of the magnetomotive forces of the coil bodies Ua, Va, Wa, Ub, Vb, Wb, Uc, Vc, and Wc can be made approximately the same, thereby reducing torque ripple.

In the motor 10, the number of the magnetic poles is "14" and the number of slots 35 is "18." That is, the number of magnetic poles is set to $(18\pm4)\times m$ (where m is an integer of 1 or greater), and the number of slots is set to $18\times m$. As a result, it is possible to balance the electromagnetic forces around the axis O.

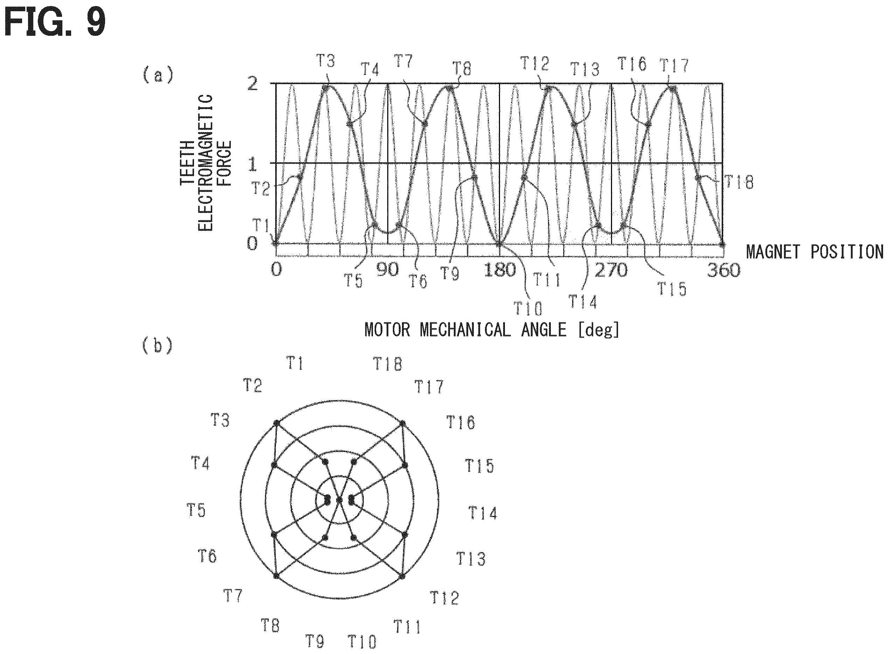

A detailed explanation will be provided with reference to FIG. 9. FIG. 9(a) is a diagram illustrating the relationship between the electromagnetic forces generated by each tooth T1 to T18 and the mechanical angle of the motor 10. FIG. 9(b) shows the variations in electromagnetic forces indicated in FIG. 9(a) along the circumferential direction when centered around the rotating shaft 11.

As shown in FIG. 4, the U phase coil bodies Ua, Ub, and Uc are arranged at approximately 90-degree intervals. The same applies to the V phase coil bodies Va, Vb, and Vc, as well as the W phase coil bodies Wa, Wb, and Wc. Therefore, as shown in FIG. 9, the balance of the electromagnetic forces is improved. Consequently, the electromagnetic force does not become unbalanced at any point, allowing for the reduction of torque variations, vibrations, and noise.

The number of magnetic poles is set to "14," the number of slots is set to "18," and the resultant phase difference in electrical angle between the magnetomotive force generated by the partial winding of the first stator windings 32a wound around the third tooth and the magnetomotive force generated by the partial winding of the second stator windings 32b wound around the third tooth is set to 80 degrees. As a result, the partial windings are arranged as shown in FIGS. 2 and 4. As shown in FIGS. 2 and 4, the first stator windings 32a wound around the third tooth can be connected to the first stator windings 32a wound around one of the adjacent teeth T1 to T18 in the circumferential direction. For example, the partial winding -U14 of the first stator windings 32a wound around the third tooth, which is tooth T18, can be connected to the partial winding +U 11 of the first stator windings 32a wound around the adjacent first tooth, which is tooth T1, in the circumferential direction.

Similarly, the second stator windings 32b wound around the third tooth can be connected to the second stator windings 32b wound around the other adjacent tooth among teeth T1 to T18 in the circumferential direction. For example, the partial winding +W24 of the second stator windings 32b wound around the third tooth, which is tooth T18, can be connected to the partial winding -W23 of the second stator windings 32b wound around the adjacent second tooth, which is tooth T17, in the circumferential direction. This allows for shorter connection wires between slots 35 at the coil ends, making the connections easier and enabling a more compact design.

As shown in FIG. 6, the lead wires A1, B1, C1, A2, B2, and C2 are arranged such that each phase becomes symmetric with respect to the axis of the rotating shaft 11. This balances and cancels out the leakage magnetic flux generated from the lead wires A1, B1, C1, A2, B2, and C2, thereby reducing detection errors of the angle sensor 12.

Second Embodiment

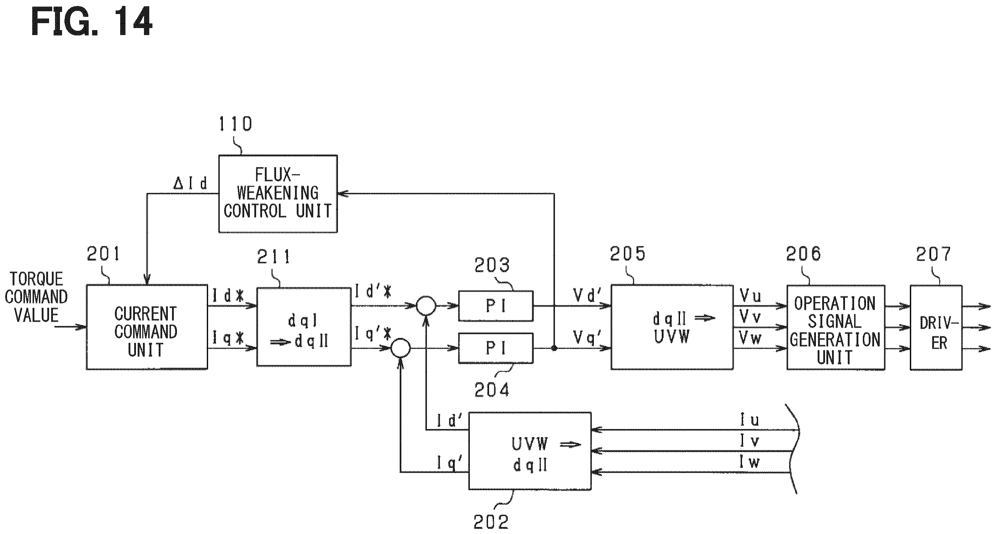

A portion of the control processing in the first embodiment may be modified. A second embodiment with modified control processing will be described with reference to FIG. 14. In the second embodiment, as in the first embodiment, the control processing is executed by a controller 50 (CPU) implementing program stored in a ROM. The various functions of the controller 50 in the second embodiment (current command unit 201, dq conversion unit 202, d-axis current feedback control unit 203, q-axis current feedback control unit 204, two-phase to three-phase conversion unit 205, operation signal generation unit 106, and flux-weakening control unit 110) are realized by the controller 50 (CPU) executing the program stored in the ROM. All or part of the various functions realized by the controller 50 may also be implemented in hardware.

FIG. 14 illustrates the control processing in the second embodiment. First, the dq conversion unit 202 in the second embodiment will be described.

The dq conversion unit 202 converts the current detection values (phase currents) for each of the three phases (U, V, W phases) detected by the current sensors provided for each phase into d-axis current and q-axis current, which are components of the orthogonal two-dimensional rotating coordinate system. At this time, the dq conversion unit 202 converts the phase currents into d-axis currents "Id 1 '" and "Id2'" in the second dq coordinate system and q-axis currents "Iq1'" and "Iq2'" in the second dq coordinate system so as to correct the voltage phase difference "δv". Specifically, the conversion is performed as shown in the following equations (27) and (28).

Math 11

$$
\begin{pmatrix} I_{d1}' \\ I_{q1}' \end{pmatrix} = \sqrt{\frac{2}{3}} \begin{pmatrix} \cos\left(\theta + \frac{\delta_v}{2}\right) & \cos\left(\theta + 120° + \frac{\delta_v}{2}\right) & \cos\left(\theta + 240° + \frac{\delta_v}{2}\right) \\ -\sin\left(\theta + \frac{\delta_v}{2}\right) & -\sin\left(\theta + 120° + \frac{\delta_v}{2}\right) & -\sin\left(\theta + 240° + \frac{\delta_v}{2}\right) \end{pmatrix} \begin{pmatrix} I_{u1} \\ I_{v1} \\ I_{w1} \end{pmatrix} \ ...(27)
$$

$$
\begin{pmatrix} I_{d2}' \\ I_{q2}' \end{pmatrix} = \sqrt{\frac{2}{3}} \begin{pmatrix} \cos\left(\theta - \frac{\delta_v}{2}\right) & \cos\left(\theta + 120° - \frac{\delta_v}{2}\right) & \cos\left(\theta + 240° - \frac{\delta_v}{2}\right) \\ -\sin\left(\theta - \frac{\delta_v}{2}\right) & -\sin\left(\theta + 120° - \frac{\delta_v}{2}\right) & -\sin\left(\theta + 240° - \frac{\delta_v}{2}\right) \end{pmatrix} \begin{pmatrix} I_{u2} \\ I_{v2} \\ I_{w2} \end{pmatrix} \ ...(28)
$$

Here, "Id1'" is the d-axis current (current detection value) of the first stator windings 32a in the second dq-axis coordinate system, and "Iq1'" is the q-axis current (current detection value) of the first stator windings 32a in the second dq-axis coordinate system. Additionally, "Id2'" is the d-axis current (current detection value) of the second stator windings 32b in the second dq-axis coordinate system, and "Iq2'" is the q-axis current (current detection value) of the second stator windings 32b in the second dq-axis coordinate system. Additionally, "δv" is the voltage phase difference of the second stator windings 32b relative to the first stator windings 32a. In the second embodiment, as shown in FIGS. 11 and 12, the current phase difference is "20°" and the resultant phase difference is "80°", so the voltage phase difference "δv" is "-12°".

By performing the conversion as shown in the equations (27) and (28), the voltage phase difference is corrected, resulting in Id1' ≠ Id2' and Iq1' ≠ Iq2'. It should be noted that converting each phase current into d-axis current and q-axis current to correct the voltage phase difference is referred to as "converting each phase current into the second dq-axis coordinate system". In FIG. 14, this is indicated as "UVW → dqII".

As shown in FIG. 14, the current command unit 201 in the second embodiment sets the d-axis current command value Id* and the q-axis current command value Iq* in the same manner as in the first embodiment. It should be noted that the d-axis current command value Id* and the q-axis current command value Iq* are values in the first dq-axis coordinate system.

Then, the current coordinate conversion unit 211 obtains the d-axis current command value Id* and the q-axis current command value Iq*, and converts them into the second dq-axis coordinate system. Specifically, the conversion is performed as shown in the following equations (29) and (30). It should be noted that in the second dq-axis coordinate system, Id1'* # Id2'* and Iq1'* ≠ Iq2'*, so they are calculated separately for the first stator windings 32a and the second stator windings 32b.

Math 12

$$\begin{pmatrix} I_{d1}{}' * \\ I_{q1}{}' * \end{pmatrix} = \begin{pmatrix} \cos\left(\dfrac{\delta_v}{2} - \dfrac{\beta}{2}\right) & \sin\left(\dfrac{\delta_v}{2} - \dfrac{\beta}{2}\right) \\ -\sin\left(\dfrac{\delta_v}{2} - \dfrac{\beta}{2}\right) & \cos\left(\dfrac{\delta_v}{2} - \dfrac{\beta}{2}\right) \end{pmatrix} \begin{pmatrix} I_{d1} * \\ I_{q1} * \end{pmatrix} \dots (29)$$

$$\begin{pmatrix} I_{d2}{}' * \\ I_{q2}{}' * \end{pmatrix} = \begin{pmatrix} \cos\left(-\dfrac{\delta_v}{2} + \dfrac{\beta}{2}\right) & \sin\left(-\dfrac{\delta_v}{2} + \dfrac{\beta}{2}\right) \\ -\sin\left(-\dfrac{\delta_v}{2} + \dfrac{\beta}{2}\right) & \cos\left(-\dfrac{\delta_v}{2} + \dfrac{\beta}{2}\right) \end{pmatrix} \begin{pmatrix} I_{d2} * \\ I_{q2} * \end{pmatrix} \dots (30)$$

Here, "Id1*" is the d-axis current command value of the first stator windings 32a in the first dq-axis coordinate system, and "Iq 1 *" is the q-axis current command value of the first stator windings 32a in the first dq-axis coordinate system. "Id2*" is the d-axis current command value of the second stator windings 32b in the first dq-axis coordinate system, and "Iq2*" is the q-axis current command value of the second stator windings 32b in the first dq-axis coordinate system. "Id1'*" is the d-axis current command value of the first stator windings 32a in the second dq-axis coordinate system, and "Iq1'*" is the q-axis current command value of the first stator windings 32a in the second dq-axis coordinate system. "Id2'*" is the d-axis current command value of the second stator windings 32b in the second dq-axis coordinate system, and "Iq2'*" is the q-axis current command value of the second stator windings 32b in the second dq-axis coordinate system. Additionally, "β" is the current phase difference, as previously mentioned, and in the first embodiment, it is "20°". "δv" is the voltage phase difference.

The d-axis current feedback control unit 203 calculates correction command values, namely the d-axis command voltages Vd1' and Vd2', by applying a PI (Proportional-Integral) gain to the deviation between the d-axis currents Id1', Id2' and the d-axis current command values Id1'*, Id2'*, as control variables for feedback control of the d-axis currents Id1' and Id2' to the d-axis current command values Id1'* and Id2'*. "Vd1'" and "Vd2'" are the d-axis command voltages (d-axis voltages) in the second dq-axis coordinate system, respectively.

In the second embodiment, since Id1'* ≠ Id2'*, it is necessary to control the d-axis current of the first stator windings 32a and the d-axis current of the second stator windings 32b separately, unlike in the first embodiment. The control may be performed by taking the sum and difference of the currents of each system.

Furthermore, the q-axis current feedback control unit 204 of the controller 50 calculates correction command values, namely the q-axis command voltages Vq1' and Vq2', by applying a PI gain to the deviation between the q-axis currents Iq1', Iq2' and the q-axis current command values Iq1'*, Iq2'*, as control variables for feedback control of the q-axis currents Iq1' and Iq2' to the q-axis current command values Iq1'* and Iq2'*. "Vq1'" and "Vq2'" are the q-axis command voltages (q-axis voltages) in the second dq-axis coordinate system, respectively.

In the second embodiment, since Iq1' # Iq2', it is necessary to control the q-axis current of the first stator windings 32a and the q-axis current of the second stator windings 32b separately, unlike in the first embodiment. The control may be performed by taking the sum and difference of the currents of each system.

The two-phase to three-phase conversion unit 205 of the controller 50 converts the d-axis and q-axis command voltages Vd1', Vq1', Vd2', and Vq2' in the second dq-axis coordinate system into the U-phase, V-phase, and W-phase command voltages. In FIG. 14, this is indicated as "dqll → UVW". The equations for converting from U-phase voltage, V-phase voltage, and W-phase voltage to d-axis voltage and q-axis voltage in the second dq-axis coordinate system are shown in the equations (31) and (32). The two-phase to three-phase conversion unit 205 performs inverse conversion of these conversion, thereby converting the d-axis and q-axis command voltages Vd1', Vq1', Vd2', and Vq2' into the U-phase, V-phase, and W-phase command voltages. In other words, it converts from the second dq-axis coordinate system to the 3-phase coordinate system.

Math 13

$$\begin{pmatrix} V_{d1}' \\ V_{q1}' \end{pmatrix} = \sqrt{\frac{2}{3}} \begin{pmatrix} \cos\left(\theta + \frac{\delta_v}{2}\right) & \cos\left(\theta + 120° + \frac{\delta_v}{2}\right) & \cos\left(\theta + 240° + \frac{\delta_v}{2}\right) \\ -\sin\left(\theta + \frac{\delta_v}{2}\right) & -\sin\left(\theta + 120° + \frac{\delta_v}{2}\right) & -\sin\left(\theta + 240° + \frac{\delta_v}{2}\right) \end{pmatrix} \begin{pmatrix} V_{u1} \\ V_{v1} \\ V_{w1} \end{pmatrix} \dots (31)$$

$$\begin{pmatrix} V_{d2}' \\ V_{q2}' \end{pmatrix} = \sqrt{\frac{2}{3}} \begin{pmatrix} \cos\left(\theta - \frac{\delta_v}{2}\right) & \cos\left(\theta + 120° - \frac{\delta_v}{2}\right) & \cos\left(\theta + 240° - \frac{\delta_v}{2}\right) \\ -\sin\left(\theta - \frac{\delta_v}{2}\right) & -\sin\left(\theta + 120° - \frac{\delta_v}{2}\right) & -\sin\left(\theta + 240° - \frac{\delta_v}{2}\right) \end{pmatrix} \begin{pmatrix} V_{u2} \\ V_{v2} \\ V_{w2} \end{pmatrix} \dots (32)$$

Note that "δv" is the voltage phase difference, and in the second embodiment, the voltage phase difference "δv" is "-12°".

By performing the conversion as shown in the equations (31) and (32), the voltage phase difference is corrected, so in the second dq-axis coordinate system, Vd1' becomes equal to Vd2', and Vq1' becomes equal to Vq2'. Converting each phase voltage into d-axis voltage and q-axis voltage to correct the voltage phase difference is referred to as "converting each phase voltage into the second dq-axis coordinate system".

Since the operation signal generation unit 106 and the driver 107 are the same as in the first embodiment, the subsequent description is omitted.

Next, the flux-weakening control unit 110 in the second embodiment will be described. As described above, the d-axis current feedback control unit 203 and the q-axis current feedback control unit 204 perform calculations in the second dq-axis coordinate system and calculate the q-axis voltages Vq1' and Vq2'.

Therefore, in the second embodiment, since the flux-weakening control unit 110 receives inputs of the q-axis voltage (Vq1' or Vq2') in the second dq-axis coordinate system, it calculates the flux-weakening current Δld (negative d-axis current) from the q-axis voltage (Vq1' or Vq2') in the same manner as in the first embodiment. The subsequent description is the same as in the first embodiment. Accordingly, effects similar to the effects of the first embodiment can be achieved.

Third Embodiment

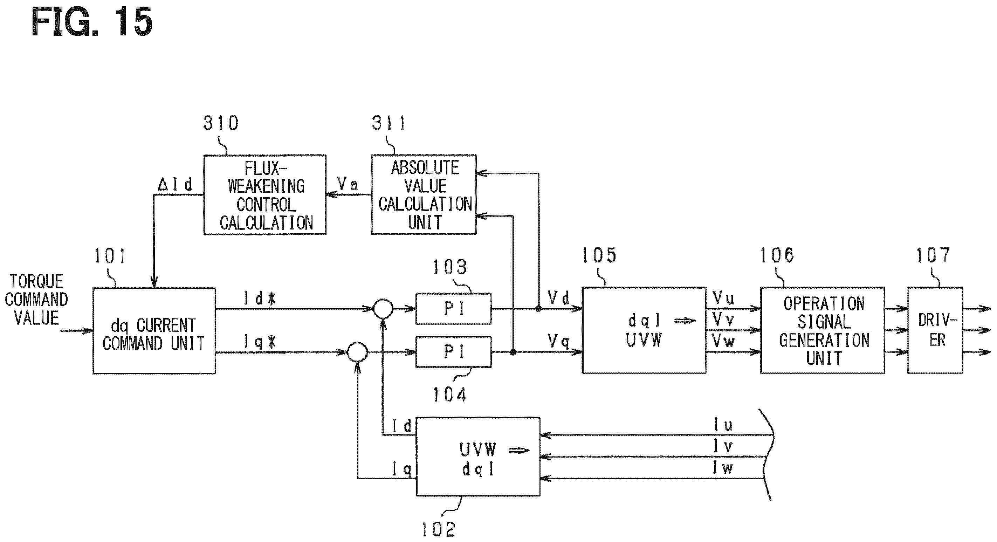

A portion of the control processing in the first embodiment may be modified. A third embodiment, in which a part of the control process is modified, will be described with reference to FIG. 15.

In the third embodiment, an absolute value calculation unit 311 is provided instead of the voltage coordinate conversion unit 111. The absolute value calculation unit 311 is implemented by a controller 50 (CPU) executing a program stored in a ROM. The absolute value calculation unit 311 may also be implemented in hardware.

The absolute value calculation unit 311, which is the controller 50, obtains a d-axis command voltage Vd1 and the q-axis command voltage Vq1 (command voltages in the first dq-axis coordinate system) from the d-axis current feedback control unit 103 and the q-axis current feedback control unit 104, respectively. Using the following equation (33), it calculates the absolute value Vt1 of the induced voltage in the stator windings 32. Additionally, the d-axis command voltage Vd2 and the q-axis command voltage Vq2 (command voltages in the first dq-axis coordinate system) may be obtained, and the absolute value Vt2 of the induced voltage can be calculated using the following equation (34). The absolute values Vt1 and Vt2 correspond to the terminal voltage Vt of the motor 10.

Math 14

$$Vt1^2 = Vd1^2 + Vq1^2 \dots (33)$$

$$Vt2^2 = Vd2^2 + Vq2^2 \dots (34)$$

By taking the absolute values, the phase shift does not need to be considered, resulting in Vt1 = Vt2. Therefore, a flux-weakening control unit 310, which is the controller 50, determines the flux-weakening current Δld (negative d-axis current) such that the calculated absolute value Vt1 (or Vt2) does not exceed the upper limit value Vmax. The flux-weakening current Δld is expressed as a value in the first dq-axis coordinate system. In other words, the flux-weakening control unit 310 monitors the absolute value Vt1 (or Vt2) and determines the flux-weakening current Δld according to the rotational speed ω (operating rotational speed) so that the calculated absolute value Vt1 (or Vt2) does not exceed the upper limit value Vmax.

As described above, the current command unit 101 sets the d-axis current command value and the q-axis current command value based on the torque command value, the flux-weakening current Δld input by the flux-weakening control unit 110, and the rotational speed ω, for example. The subsequent process is omitted as it is as described above. Then, according to the configuration of the third embodiment, the same effects as those of the first embodiment can be obtained.

Fourth Embodiment

The configuration of each of the first to the third embodiment may be modified as shown below. A fourth embodiment, in which part of the configuration of each of the above embodiments is modified, will be described.

In the above embodiments, the resultant phase difference is set to 80 degrees, but in the fourth embodiment, the resultant phase difference is set to 40 degrees. That is, in the fourth embodiment, the phase difference between the magnetomotive forces of the coil bodies Ua, Va, Wa and the coil bodies Uc, Vc, Wc is set to 40 degrees. This is achieved by ensuring that the resultant phase difference between the magnetomotive force generated by the partial winding of the first stator windings 32a wound on each third tooth and the magnetomotive force generated by the partial winding of the second stator windings 32b wound on the same third tooth is 40 degrees. While it is preferable to set it to 40 degrees, it may be modified within the range of 32 to 48 degrees.

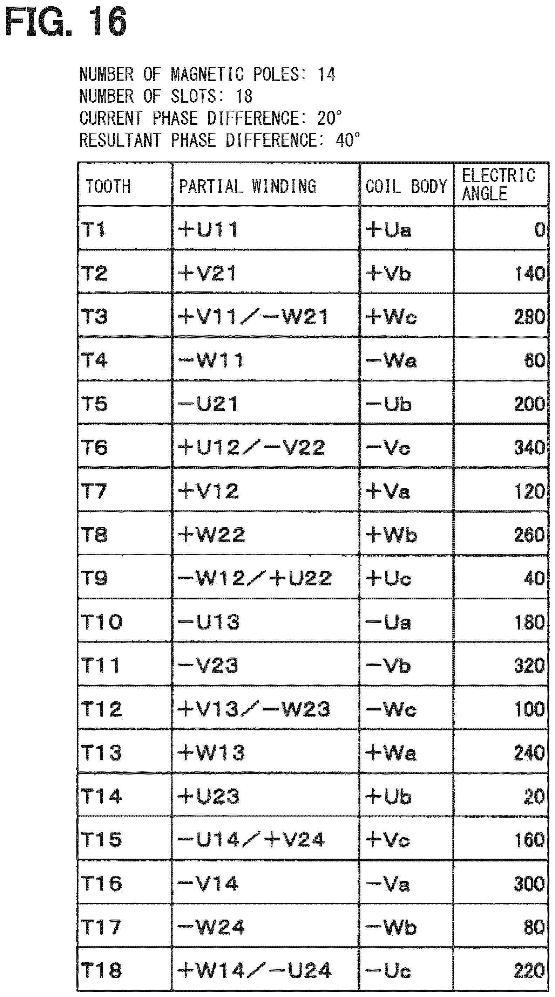

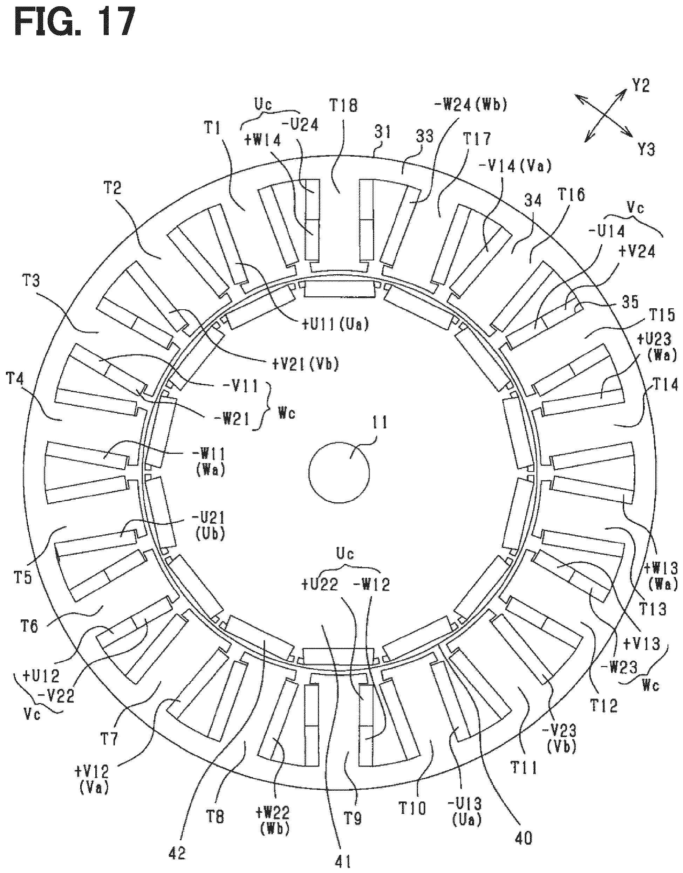

When doing so, the arrangement of the partial winding of each phase will be as shown in FIGS. 16 and 17. Here, taking the coil body Uc provided on the tooth T9 as an example, the explanation will be given on how the resultant phase difference becomes 40 degrees.

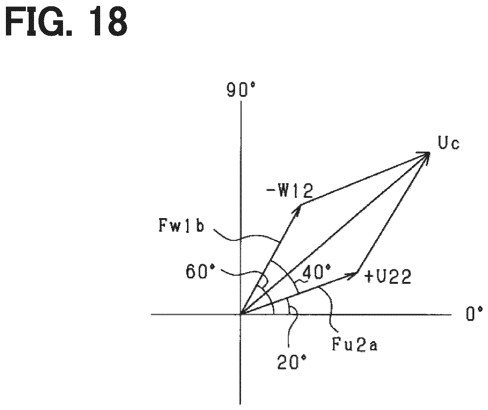

As shown in FIG. 16, the coil body Uc provided on the tooth T9 is composed of the partial windings -W12/+U22. The magnetomotive force Fw1b of the partial winding -W12 and the magnetomotive force Fu2a of the partial winding +U22 are as shown in the equation (10) and equation (3), respectively. When these are represented in a vector diagram, it appears as shown in FIG. 18. Then, when the magnetomotive force Fw1b of the partial winding -W12 and the magnetomotive force Fu2a of the partial winding +U22 are added, it results in the form shown in the equation (35).
Math 15

$$Fu3a = Fw1b + Fu2a$$
$$= N \times I \times \sin(\theta - 60°) + N \times I \times \sin(\theta - 20°)$$
$$= 1.88 \times N \times I \times \sin(\theta - 40°) \dots (35)$$

In Equation (35), the number of turns of the partial winding -W12 and the number of turns of the partial winding +U22 are both represented as N. As shown in the equation (35), by winding the partial winding -W12 and the partial winding +U22 on the tooth T9, it is possible to achieve a magnetomotive force of the coil bodies Uc, Vc, and Wc that has a phase difference (resultant phase difference) of 40 degrees relative to the magnetomotive force of the coil bodies Ua, Va, and Wa.

By the way, as shown in the equation (35), the magnetomotive force is proportional to the number of turns of the partial winding. Therefore, if the number of turns of each partial winding is not set appropriately, the amplitudes of the magnetomotive forces will not be uniform among the coil bodies Ua, Va, Wa, Ub, Vb, Wb, Uc, Vc, and Wc.

Therefore, in the fourth embodiment, the number of turns of the coil bodies Ua, Va, Wa, and the coil bodies Ub, Vb, Wb are both set to the same number of turns "Na". When the number of turns of the first stator windings 32a and the number of turns of the second stator windings 32b wound on the third tooth are set to "Nb", the number of turns "Na" and "Nb" are set to satisfy the relationship 1.8 ≤ Na/Nb ≤ 2.0. It is preferable that Na/Nb be a value close to 1.88. In this embodiment, the number of turns is set so that the ratio of Na to Nb is 19:10 (Na/Nb = 1.9).

Furthermore, as shown in FIG. 12, when the current phase difference "β" is set to "20°" and the phase difference of the magnetomotive force (resultant phase difference) is set to "40°", it has been found that the voltage phase difference "δv" becomes "34°". Therefore, when performing motor control in the above embodiment, coordinate conversion is carried out with the current phase difference "β" set to "20°" and the voltage phase difference "δv" set to "34°".

Accordingly, the configuration of the fourth embodiment provides the following effects.

The phase differences between the magnetomotive forces of the coil bodies Ua, Va, Wa and those of the coil bodies Ub, Vb, Wb, as well as the phase differences between the magnetomotive forces of the coil bodies Ub, Vb, Wb and those of the coil bodies Uc, Vc, Wc, are set to be within a predetermined phase range that includes 20 degrees. Specifically, the resultant phase difference of the magnetomotive force generated by the partial winding of the second stator windings 32b wound around the third tooth, relative to the magnetomotive force generated by the partial winding of the first stator windings 32a wound around the third tooth, is set to be 40 degrees. In other words, the resultant phase difference is set to be 40 degrees. As a result, as shown in the equations (15), (16) and (35), it is possible to cancel out the 6th or 12th order harmonic components of the torque, thereby reducing torque ripple.

Additionally, the number of turns of windings is set to satisfy the relationship 1.8 ≤ Na/Nb ≤ 2.0. In this embodiment, the number of tuns of windings is set such that the ratio Na:Nb is 19:10 (Na/Nb is 1.9). As a result, the amplitudes of the magnetomotive forces of the coil bodies Ua, Va, Wa, Ub, Vb, Wb, Uc, Vc, and Wc can be made approximately the same, thereby reducing torque ripple.

In the motor 10, the number of the magnetic poles is "14" and the number of slots 35 is "18." That is, the number of magnetic poles is set to (18±4)×m (where m is an integer of 1 or greater), and the number of slots is set to 18×m. As a result, similar to the first embodiment, the balance of the electromagnetic force can be achieved around the axis.

Fifth Embodiment

In the first to third embodiments, the current phase difference "β" between the first inverter circuit 51 and the second inverter circuit 52 is set to 20 degrees in electrical angle, whereas in the fifth embodiment, it is set to 40 degrees. In other words, the phase difference between the magnetomotive force of coil bodies Ua, Va, Wa and the magnetomotive force of coil bodies Ub, Vb, Wb is 40 degrees.

Therefore, in the fifth embodiment, in the equations (13) and (14), the first term corresponds to the components based on coil bodies Ua, Va, Wa, the second term corresponds to the components based on coil bodies Uc, Vc, Wc, and the third term corresponds to the components based on coil bodies Ub, Vb, Wb.

In the third embodiment, ",\l " indicates the phase difference between the magnetomotive force of coil body Ua and the magnetomotive force of coil body Uc in the U phase, the phase difference between the magnetomotive force of coil body Va and the magnetomotive force of coil body Vc in the V phase, and the phase difference between the magnetomotive force of coil body Wa and the magnetomotive force of coil body Wc in the W phase. Similarly, "$\lambda 2$" indicates the phase difference between the magnetomotive force of coil body Ua and the magnetomotive force of coil body Ub in the U phase, the phase difference between the magnetomotive force of coil body Va and the magnetomotive force of coil body Vb in the V phase, and the phase difference between the magnetomotive force of coil body Wa and the magnetomotive force of coil body Wb in the W phase. Additionally, in the equations (13) and (14), "Ta" is a constant that is proportional to the number of turns and the amplitude of the current of the coil bodies Ua, Va, and Wa. "Tb" is a constant proportional to the number of turns and the amplitude of the current in coil bodies Uc, Vc, Wc. "Tc" is a constant proportional to the number of turns and the amplitude of the current in coil bodies Ub, Vb, Wb.

Therefore, if the phase differences between the magnetomotive forces of coil bodies Uc, Vc, Wc and the magnetomotive forces of coil bodies Ua, Va, Wa are set to 20 degrees, it can be said that torque ripple can be reduced according to the equations (15) and (16).

In other words, the phase differences between the magnetomotive forces of coil bodies Uc, Vc, Wc and the magnetomotive forces of coil bodies Ua, Va, Wa, as well as the phase differences between the magnetomotive forces of coil bodies Ub, Vb, Wb and the magnetomotive forces of coil bodies Uc, Vc, Wc, may each be set to 20 degrees. While a phase difference of 20 degrees is desirable, a predetermined phase range that includes 20 degrees (for example, a range of 15 to 25 degrees) is also acceptable, and even in this case, the effect of reducing torque ripple can be achieved.

Therefore, in the fifth embodiment, the phase difference between the magnetomotive force generated by the partial windings of the first stator windings 32a wound around each third tooth and the magnetomotive force generated by the partial windings of the second stator windings 32b wound around the same third tooth is set to be in the range of 72 to 88 electrical degrees. In other words, the resultant phase difference is set to be in the range of 72 to 88 electrical degrees. In the third embodiment, as in the first embodiment, it is desirable to set the resultant phase difference to 80 degrees.

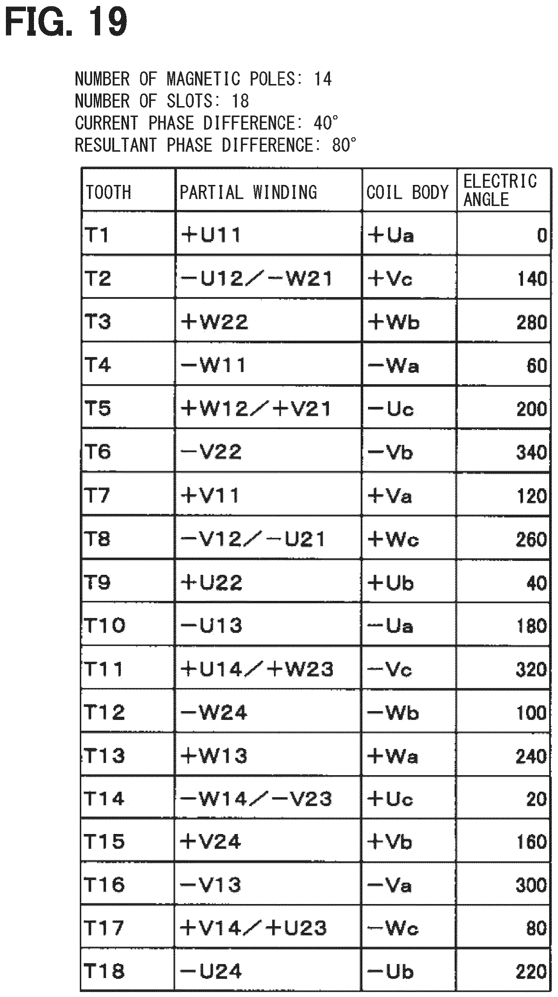

Specifically, as shown in FIG. 19, partial windings are arranged on each of the teeth T1 to T18. By setting in this manner, the phase difference between the magnetomotive force of the coil bodies Ua, Va, Wa and the magnetomotive force of the coil bodies Uc, Vc, Wc, and the phase difference between the magnetomotive force of the coil bodies Uc, Vc, Wc and the magnetomotive force of the coil bodies Ub, Vb, Wb can each be set to 20 degrees. Also, as in the first embodiment, in order to align the magnetomotive forces of the coil bodies Ua, Va, Wa, Ub, Vb, Wb, Uc, Vc, and Wc, the number of turns is set so that the ratio Na:Nb is 3:2 (Na/Nb is 1.5).

Additionally, as shown in FIG. 12, when the current phase difference "β" is set to "40°" and the phase difference of the magnetomotive force (resultant phase difference) is set to "80°," it has been found that the voltage phase difference "δv" becomes "72°." Therefore, when performing motor control in the first to third embodiments, coordinate conversion is performed with the current phase difference "β" set to "40°" and the voltage phase difference "δv" set to "72°".

By configuring as described above, the fifth embodiment can achieve the same effects as those of the first to third embodiments.

Sixth Embodiment

In the first to third embodiments, the current phase difference "β" between the first inverter circuit 51 and the second inverter circuit 52 is set to 20 degrees in electrical angle. However, in a sixth embodiment, the current phase difference "β" between the inverter circuits 51 and 52 is set to 40 degrees, and the resultant phase difference is set to 40 degrees. In other words, the phase difference between the magnetomotive force generated by the partial winding of the first stator windings 32a wound around each third tooth and the magnetomotive force generated by the partial winding of the second stator windings 32b wound around the same third tooth is set to be 40 degrees. While it is preferable to set it to 40 degrees, it may be modified within the range of 32 to 48 degrees.

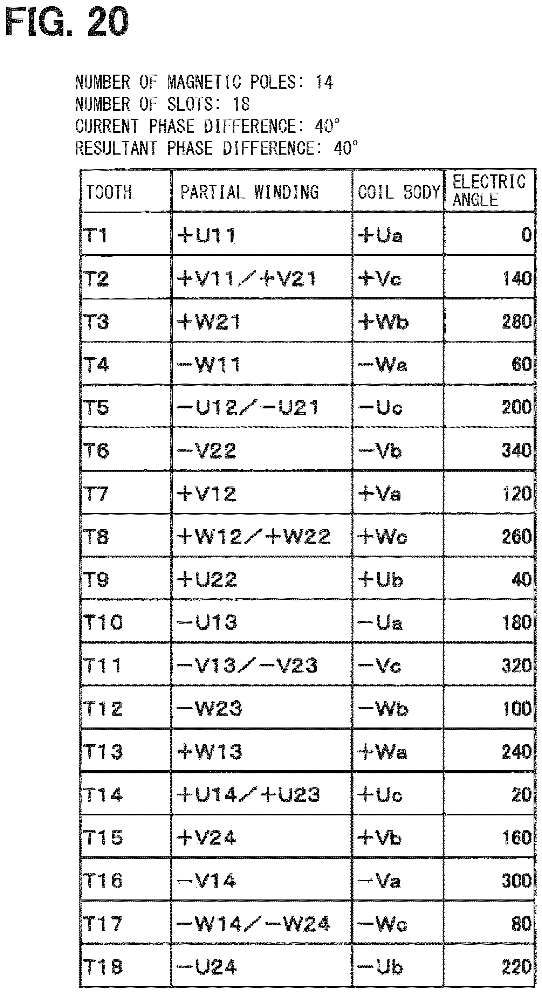

Specifically, as shown in FIG. 20, partial windings are arranged on each of the teeth T1 to T18. By setting in this manner, the phase difference between the magnetomotive force of the coil bodies Ua, Va, Wa and the magnetomotive force of the coil bodies Uc, Vc, Wc, and the phase difference between the magnetomotive force of the coil bodies Uc, Vc, Wc and the magnetomotive force of the coil bodies Ub, Vb, Wb can each be set to 20 degrees. Additionally, for the same reasons as in the second embodiment, the number of turns is set such that the ratio of Na:Nb is 19:10 (Na/Nb is 1.9) in order to align the magnetomotive forces of the coil bodies Ua, Va, Wa, Ub, Vb, Wb, Uc, Vc, and Wc.

Additionally, as shown in FIG. 12, when the current phase difference "β" is set to "40°" and the magnetomotive force phase difference (resultant phase difference) is set to "40°", it has been found that the voltage phase difference "δv" becomes "26°". Therefore, when performing motor control in the first to third embodiments, the coordinate conversion is performed with the current phase difference "β" set to "40°" and the voltage phase difference "δv" set to "26°".

As a result, the sixth embodiment can achieve the same effects as those obtained in the first to fourth embodiments.

Other Embodiments

In the above embodiment, the number of magnetic poles may be set to "22", the number of slots may be set to "18", and the current phase difference "β" between the first inverter circuit 51 and the second inverter circuit 52 may be set to "20 degrees", with the resultant phase difference set to "80 degrees".

Additionally, as shown in FIG. 12, when the current phase difference "β" is set to "20°" and the magnetomotive force phase difference (resultant phase difference) is set to "80°", it has been found that the voltage phase difference "δv" becomes "-12°". Therefore, when performing motor control in the first to third embodiments, the coordinate conversion may be performed with the current phase difference "β" set to "20°" and the voltage phase difference "δv" set to "-12°".

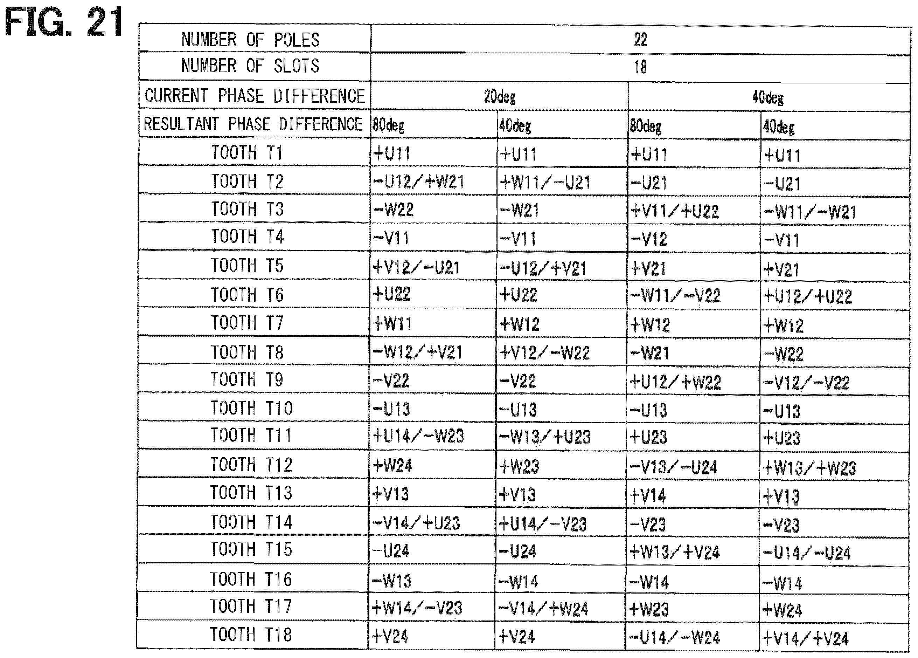

An example of arrangement of the partial windings in this case is shown in FIG. 21. As shown in FIG. 21, the first stator windings 32a wound around the third tooth can be connected to the first stator windings 32a wound around one of the adjacent teeth T1 to T18 in the circumferential direction. For example, in this case, the partial winding -U12 of the first stator windings 32a wound around the third tooth, which is tooth T2, can be connected to the partial winding +U11 of the first stator windings 32a wound around the adjacent first tooth, which is tooth T1, in the circumferential direction.

Similarly, the second stator windings 32b wound around the third tooth can be connected to the second stator windings 32b wound around the other adjacent tooth among teeth T1 to T18 in the circumferential direction. For example, in this case, the partial winding +W21 of the second stator windings 32b wound around tooth T2, which is the third tooth, can be connected to the partial winding -W22 of the second stator windings 32b wound around tooth T3, which is the second tooth adjacent in the circumferential direction. This allows for shorter connection wires between slots 35 at the coil ends, making the connections easier and enabling a more compact design.

In the above embodiment, the number of magnetic poles may be set to "22", the number of slots may be set to "18", and the current phase difference "β" between the first inverter circuit 51 and the second inverter circuit 52 may be set to "20 degrees", with the resultant phase difference set to "40 degrees". An example of arrangement of the partial windings in this case is shown in FIG. 21.

Furthermore, as shown in FIG. 12, when the current phase difference "β" is set to "20°" and the phase difference of the magnetomotive force (resultant phase difference) is set to "40°", it has been found that the voltage phase difference "δv" becomes "34°". Therefore, when performing motor control in the first to third embodiments, the coordinate conversion may be performed with the current phase difference "β" set to "20°" and the voltage phase difference "δv" set to "34°".

In the above embodiment, the number of magnetic poles may be set to "22", the number of slots may be set to "18", and the current phase difference "β" between the first inverter circuit 51 and the second inverter circuit 52 may be set to "40 degrees", with the resultant phase difference set to "80 degrees". An example of arrangement of the partial windings in this case is shown in FIG. 21.

In this case, as shown in FIG. 21, the first stator windings 32a wound around the third tooth can be connected to the first stator windings 32a wound around one of the adjacent teeth T1 to T18 in the circumferential direction. For example, in this case, the partial winding +V11 of the first stator winding 32a wound around the third tooth, which is tooth T3, can be connected to the partial winding -V12 of the first stator winding 32a wound around the first tooth, which is tooth T4, adjacent in the circumferential direction.

Similarly, the second stator windings 32b wound around the third tooth can be connected to the second stator windings 32b wound around the other adjacent tooth among teeth T1 to T18 in the circumferential direction. For example, in this case, the partial winding +U22 of the second stator windings 32b wound around the third tooth, which is tooth T3, can be connected to the partial winding -U21 of the second stator windings 32b wound around the second tooth, which is tooth T2, adjacent in the circumferential direction. This allows for shorter connection wires between slots 35 at the coil ends, making the connections easier and enabling a more compact design.

Additionally, as shown in FIG. 12, when the current phase difference "β" is set to "40°" and the phase difference of the magnetomotive force (resultant phase difference) is set to "80°," it has been found that the voltage phase difference "δv" becomes "72°." Therefore, when performing motor control in the first to third embodiments, the coordinate conversion may be performed with the current phase difference "β" set to "40°" and the voltage phase difference "δv" set to "72°".

In the above embodiment, the number of magnetic poles may be set to "22", the number of slots may be set to "18", and the current phase difference "β" between the first inverter circuit 51 and the second inverter circuit 52 may be set to "40 degrees", with the resultant phase difference set to "40 degrees". An example of arrangement of the partial windings in this case is shown in FIG. 21.

Additionally, as shown in FIG. 12, when the current phase difference "β" is set to "40°" and the magnetomotive force phase difference (resultant phase difference) is set to "40°", it has been found that the voltage phase difference "δv" becomes "26°". Therefore, when performing motor control in the first to third embodiments, the coordinate conversion may be performed with the current phase difference "β" set to "40°" and the voltage phase difference "δv" set to "26°".

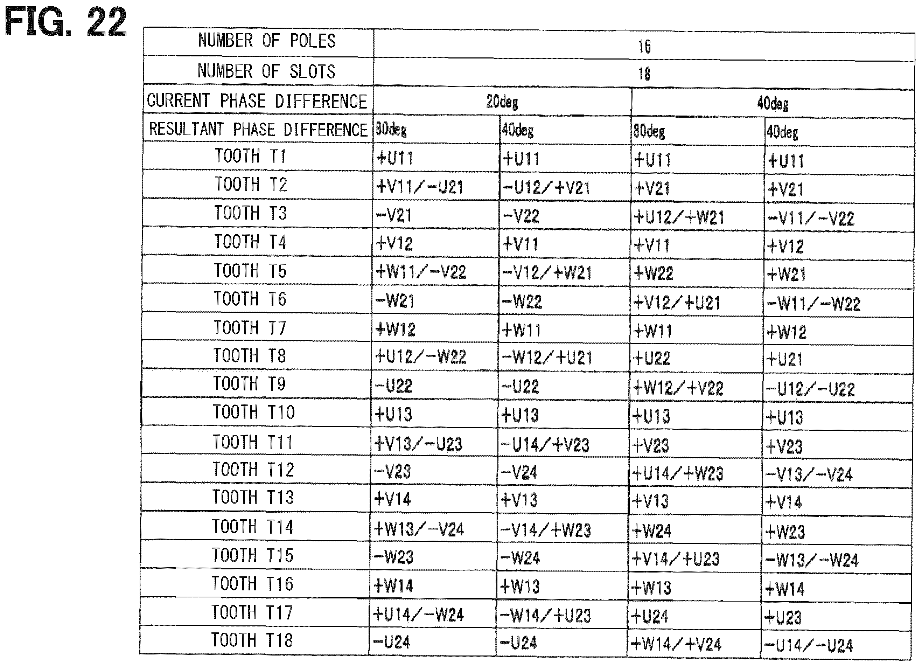

In the above embodiment, the number of magnetic poles may be set to "16", the number of slots may be set to "18", and the current phase difference "β" between the first inverter circuit 51 and the second inverter circuit 52 may be set to "20 degrees", with the resultant phase difference set to "80 degrees". An example of arrangement of the partial windings in this case is shown in FIG. 22.

In this case, as shown in FIG. 22, the first stator windings 32a wound around the third tooth can be connected to the first stator windings 32a wound around the teeth T1 to T18, which are two teeth apart in the circumferential direction. For example, in this case, the partial winding +V11 of the first stator windings 32a wound around the tooth T2, which is the third tooth, can be connected to the partial winding +V12 of the first stator windings 32a wound around the tooth T4, which is the first tooth two teeth apart in the circumferential direction.

Similarly, the second stator windings 32b wound around the third tooth can be connected to the second stator windings 32b wound around the teeth T1 to T18, which are two teeth apart in the circumferential direction. For example, in this case, the partial winding -U21 of the second stator windings 32b wound around the tooth T2, which is the third tooth, can be connected to the partial winding -U24 of the second stator windings 32b wound around the tooth T18, which is the second tooth two teeth apart in the circumferential direction. This allows for shorter connection wires between slots 35 at the coil ends, making the connections easier and enabling a more compact design.

Additionally, as shown in FIG. 12, when the current phase difference "β" is set to "20°" and the magnetomotive force phase difference (resultant phase difference) is set to "80°", it has been found that the voltage phase difference "δv" becomes "-12°". Therefore, when performing motor control in the first to third embodiments, the coordinate conversion may be performed with the current phase difference "β" set to "20°" and the voltage phase difference "δv" set to "-12°".

In the above embodiment, the number of magnetic poles may be set to "16", the number of slots may be set to "18", and the current phase difference "β" between the first inverter circuit 51 and the second inverter circuit 52 may be set to "20 degrees", with the resultant phase difference set to "40 degrees". An example of arrangement of the partial windings in this case is shown in FIG. 22.

In this case, as shown in FIG. 22, the first stator windings 32a wound around the third tooth can be connected to the first stator windings 32a wound around one of the adjacent teeth T1 to T18 in the circumferential direction. For example, in this case, the partial winding -U12 of the first stator windings 32a wound around the third tooth, which is tooth T2, can be connected to the partial winding +U11 of the first stator windings 32a wound around the adjacent first tooth, which is tooth T1, in the circumferential direction.

Similarly, the second stator windings 32b wound around the third tooth can be connected to the second stator windings 32b wound around the other adjacent tooth among teeth T1 to T18 in the circumferential direction. For example, in this case, the partial winding +V21 of the second stator windings 32b wound around the third tooth, which is tooth T2, can be connected to the partial winding -V22 of the second stator windings 32b wound around the second tooth, which is tooth T3, adjacent in the circumferential direction. This allows for shorter connection wires between slots 35 at the coil ends, making the connections easier and enabling a more compact design.

Furthermore, as shown in FIG. 12, when the current phase difference "β" is set to "20°" and the phase difference of the magnetomotive force (resultant phase difference) is set to "40°", it has been found that the voltage phase difference "δv" becomes "34°". Therefore, when performing motor control in the first to third embodiments, the coordinate conversion may be performed with the current phase difference "β" set to "20°" and the voltage phase difference "δv" set to "34°".

In the above embodiment, the number of magnetic poles may be set to "16", the number of slots may be set to "18", and the current phase difference "β" between the first inverter circuit 51 and the second inverter circuit 52 may be set to "40 degrees", with the resultant phase difference set to "80 degrees". An example of arrangement of the partial windings in this case is shown in FIG. 22.

In this case, as shown in FIG. 22, the first stator windings 32a wound around the third tooth can be connected to the first stator windings 32a wound around the teeth T1 to T18, which are two teeth apart in the circumferential direction. For example, in this case, the partial winding +U12 of the first stator windings 32a wound around the third tooth, which is tooth T3, can be connected to the partial winding +U11 of the first stator windings 32a wound around the first tooth, which is tooth T1, two teeth apart in the circumferential direction.

Similarly, the second stator windings 32b wound around the third tooth can be connected to the second stator windings 32b wound around the teeth T1 to T18, which are two teeth apart in the circumferential direction. For example, in this case, the partial winding +W21 of the second stator windings 32b wound around the third tooth, which is tooth T3, can be connected to the partial winding +W22 of the second stator windings 32b wound around the second tooth, which is tooth T5, two teeth apart in the circumferential direction. This allows for shorter connection wires between slots 35 at the coil ends, making the connections easier and enabling a more compact design.

Additionally, as shown in FIG. 12, when the current phase difference "β" is set to "40°" and the phase difference of the magnetomotive force (resultant phase difference) is set to "80°," it has been found that the voltage phase difference "δv" becomes "72°." Therefore, when performing motor control in the first to third embodiments, the coordinate conversion may be performed with the current phase difference "β" set to "20°" and the voltage phase difference "δv" set to "72°".

In the above embodiment, the number of magnetic poles may be set to "16", the number of slots may be set to "18", and the current phase difference "β" between the first inverter circuit 51 and the second inverter circuit 52 may be set to "40 degrees", with the resultant phase difference set to "40 degrees". An example of arrangement of the partial windings in this case is shown in FIG. 22.

In this case, as shown in FIG. 22, the first stator windings 32a wound around the third tooth can be connected to the first stator windings 32a wound around one of the adjacent teeth T1 to T18 in the circumferential direction. For example, in this case, the partial winding -V11 of the first stator windings 32a wound around the third tooth, which is tooth T3, can be connected to the partial winding +V12 of the first stator windings 32a wound around the first tooth, which is tooth T4, adjacent in the circumferential direction.

Similarly, the second stator windings 32b wound around the third tooth can be connected to the second stator windings 32b wound around the other adjacent tooth among teeth T1 to T18 in the circumferential direction. For example, in this case, the partial winding -V22 of the second stator windings 32b wound around tooth T3, which is the third tooth, can be connected to the partial winding -V21 of the second stator windings 32b wound around tooth T2, which is the second tooth adjacent in the circumferential direction. This allows for shorter connection wires between slots 35 at the coil ends, making the connections easier and enabling a more compact design.

Additionally, as shown in FIG. 12, when the current phase difference "β" is set to "40°" and the magnetomotive force phase difference (resultant phase difference) is set to "40°", it has been found that the voltage phase difference "δv" becomes "26°". Therefore, when performing motor control in the first to third embodiments, the coordinate conversion may be performed with the current phase difference "β" set to "40°" and the voltage phase difference "δv" set to "26°".

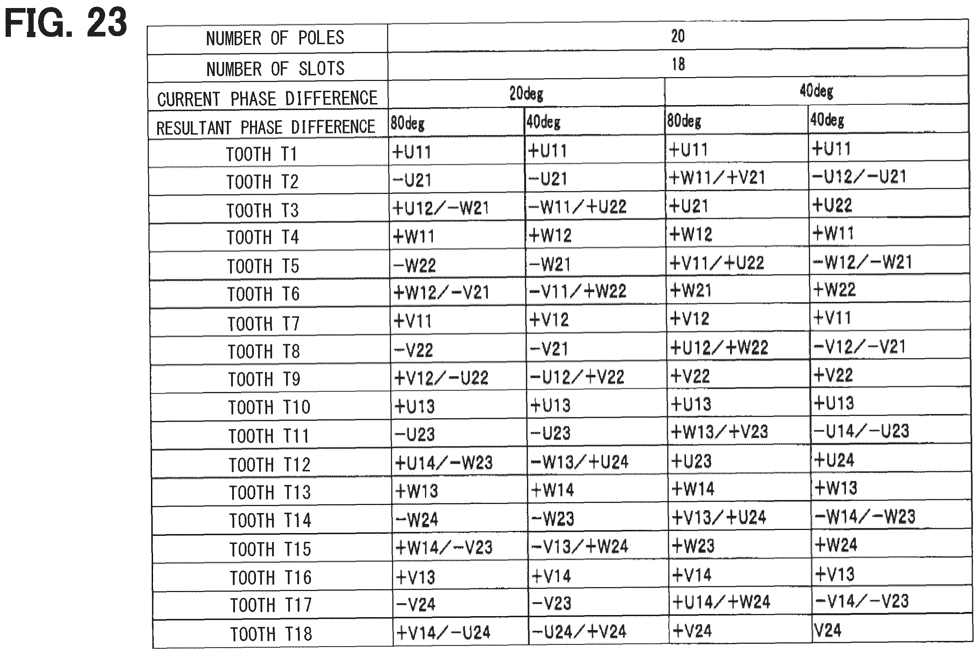

In the above embodiment, the number of magnetic poles may be set to "20", the number of slots may be set to "18", and the current phase difference "β" between the first inverter circuit 51 and the second inverter circuit 52 may be set to "20 degrees", with the resultant phase difference set to "80 degrees". An example of arrangement of the partial windings in this case is shown in FIG. 23.

In this case, as shown in FIG. 23, the first stator windings 32a wound around the third tooth can be connected to the first stator windings 32a wound around the teeth T1 to T18, which are two teeth apart in the circumferential direction. For example, in this case, the partial winding +U12 of the first stator windings 32a wound around the third tooth, which is tooth T3, can be connected to the partial winding +U11 of the first stator windings 32a wound around the first tooth, which is tooth T1, two teeth apart in the circumferential direction.

Similarly, the second stator windings 32b wound around the third tooth can be connected to the second stator windings 32b wound around the teeth T1 to T18, which are two teeth apart in the circumferential direction. For example, in this case, the partial winding -W21 of the second stator windings 32b wound around the third tooth, which is tooth T3, can be connected to the partial winding -W22 of the second stator windings 32b wound around the second tooth, which is tooth T5, two teeth apart in the circumferential direction. This allows for shorter connection wires between slots 35 at the coil ends, making the connections easier and enabling a more compact design.

Additionally, as shown in FIG. 12, when the current phase difference "β" is set to "20°" and the magnetomotive force phase difference (resultant phase difference) is set to "80°", it has been found that the voltage phase difference "δv" becomes "-12°". Therefore, when performing motor control in the first to third embodiments, the coordinate conversion may be performed with the current phase difference "β" set to "20°" and the voltage phase difference "δv" set to "-12°".

In the above embodiment, the number of magnetic poles may be set to "20", the number of slots may be set to "18", and the current phase difference "β" between the first inverter circuit 51 and the second inverter circuit 52 may be set to "20 degrees", with the resultant phase difference set to "40 degrees". An example of arrangement of the partial windings in this case is shown in FIG. 23.

In this case, as shown in FIG. 23, the first stator windings 32a wound around the third tooth can be connected to the first stator windings 32a wound around one of the adjacent teeth T1 to T18 in the circumferential direction. For example, in this case, the partial winding -W11 of the first stator windings 32a wound around the third tooth, which is tooth T3, can be connected to the partial winding +W12 of the first stator windings 32a wound around the first tooth, which is tooth T4, adjacent in the circumferential direction.

Similarly, the second stator windings 32b wound around the third tooth can be connected to the second stator windings 32b wound around the other adjacent tooth among teeth T1 to T18 in the circumferential direction. For example, in this case, the partial winding +U22 of the second stator windings 32b wound around the third tooth, which is tooth T3, can be connected to the partial winding -U21 of the second stator windings 32b wound around the second tooth, which is tooth T2, adjacent in the circumferential direction. This allows for shorter connection wires between slots 35 at the coil ends, making the connections easier and enabling a more compact design.

Furthermore, as shown in FIG. 12, when the current phase difference "β" is set to "20°" and the phase difference of the magnetomotive force (resultant phase difference) is set to "40°", it has been found that the voltage phase difference "δv" becomes "34°". Therefore, when performing motor control in the first to third embodiments, the coordinate conversion may be performed with the current phase difference "β" set to "20°" and the voltage phase difference "δv" set to "34°".

In the above embodiment, the number of magnetic poles may be set to "20", the number of slots may be set to "18", and the current phase difference "β" between the first inverter circuit 51 and the second inverter circuit 52 may be set to "40 degrees", with the resultant phase difference set to "80 degrees". An example of arrangement of the partial windings in this case is shown in FIG. 23.

In this case, as shown in FIG. 23, the first stator windings 32a wound around the third tooth can be connected to the first stator windings 32a wound around the teeth T1 to T18, which are two teeth apart in the circumferential direction. For example, in this case, the partial winding +W11 of the first stator windings 32a wound around the third tooth, which is tooth T2, can be connected to the partial winding +W12 of the first stator windings 32a wound around the first tooth, which is tooth T4, two teeth apart in the circumferential direction.

Similarly, the second stator windings 32b wound around the third tooth can be connected to the second stator windings 32b wound around the teeth T1 to T18, which are two teeth apart in the circumferential direction. For example, in this case, the partial winding +V21 of the second stator windings 32b wound around the third tooth, which is tooth T2, can be connected to the partial winding +V24 of the second stator windings 32b wound around the second tooth, which is tooth T18, two teeth apart in the circumferential direction. This allows for shorter connection wires between slots 35 at the coil ends, making the connections easier and enabling a more compact design.

Additionally, as shown in FIG. 12, when the current phase difference "β" is set to "40°" and the phase difference of the magnetomotive force (resultant phase difference) is set to "80°," it has been found that the voltage phase difference "δv" becomes "72°." Therefore, when performing motor control in the first to third embodiments, the coordinate conversion may be performed with the current phase difference "β" set to "40°" and the voltage phase difference "δv" set to "72°".

In the above embodiment, the number of magnetic poles may be set to "20", the number of slots may be set to "18", and the current phase difference "β" between the first inverter circuit 51 and the second inverter circuit 52 may be set to "40 degrees", with the resultant phase difference set to "40 degrees". An example of arrangement of the partial windings in this case is shown in FIG. 23.

In this case, as shown in FIG. 23, the first stator windings 32a wound around the third tooth can be connected to the first stator windings 32a wound around one of the adjacent teeth T1 to T18 in the circumferential direction. For example, in this case, the partial winding -U 12 of the first stator windings 32a wound around the third tooth, which is tooth T2, can be connected to the partial winding +U11 of the first stator windings 32a wound around the adjacent first tooth, which is tooth T1, in the circumferential direction.

Similarly, the second stator windings 32b wound around the third tooth can be connected to the second stator windings 32b wound around the other adjacent tooth among teeth T1 to T18 in the circumferential direction. For example, in this case, the partial winding -U21 of the second stator windings 32b wound around the third tooth, which is tooth T2, can be connected to the partial winding -U22 of the second stator winding 32b wound around the second tooth, which is tooth T3, adjacent in the circumferential direction. This allows for shorter connection wires between slots 35 at the coil ends, making the connections easier and enabling a more compact design.

Additionally, as shown in FIG. 12, when the current phase difference "β" is set to "40°" and the magnetomotive force phase difference (resultant phase difference) is set to "40°", it has been found that the voltage phase difference "δv" becomes "26°". Therefore, when performing motor control in the first to third embodiments, the coordinate conversion may be performed with the current phase difference "β" set to "40°" and the voltage phase difference "δv" set to "26°".

In the above embodiments, the number of magnetic poles may be set to $(18\pm4)\times m$ (where m is an integer of 1 or more), and the number of slots can be set to $18\times m$. Alternatively, the number of magnetic poles may be set to $(18\pm2)\times n$ (where n is an integer of 1 or more), and the number of slots may be set to $18\times n$. In addition, when the number of magnetic poles is set to $(18\pm4)\times m$ (where m is an integer of 1 or more) and the number of slots is set to $18\times m$, as mentioned earlier with reference to FIG. 9, the electromagnetic force increases at 90-degree intervals, allowing the system to maintain balance and thereby reduce noise and vibration.

In the above embodiments, it is preferable that the current phase difference "β" between the first inverter circuit 51 and the second inverter circuit 52 is "20 degrees" or "40 degrees". However, it may be adjusted within the range of 15 to 25 degrees and within the range of 35 to 45 degrees, respectively.

In the above embodiments, it is preferable that the resultant phase difference of the first stator windings 32a and the second stator windings 32b wound around the third tooth is "40 degrees" or "80 degrees". However, it may be adjusted within the range of 32 to 48 degrees and within the range of 72 to 88 degrees, respectively.

In the above embodiments, the motor 10 is not limited to a radial gap motor and may be, for example, an axial gap motor. Additionally, the motor 10 may be a reluctance motor or an induction motor.

In the above embodiments and the above modifications, torque ripple is reduced by setting the resultant phase difference (magnetomotive force resultant phase difference) of the magnetomotive forces generated by the partial winding of the first stator windings 32a and the partial winding of the second stator windings 32b wound around the third tooth to be within a predetermined range. Instead of the magnetomotive force resultant phase difference, a resultant phase difference (current resultant phase difference) of the currents flowing through the partial winding of the first stator windings 32a and the partial winding of the second stator windings 32b wound around the third tooth may be used.

The phase of the current flowing through the partial winding is shifted by 180 degrees depending on the winding direction of the partial winding. In other words, even for the partial windings of the same U-phase, it is necessary to consider the current resultant phase difference by shifting the phase by 180 degrees between the current flowing through the "+" partial winding and the current flowing through the "-" partial winding.

For example, if the current phase difference "$\beta$" of the inverter is 20 degrees, and the reference phase "$\theta$" is the phase of the current flowing through the "+" partial winding of the U-phase, the phase of the current flowing through the "-" partial winding of the V-phase is "$\theta$ - 120 (phase shift due to V-phase) - 20 (shift based on current phase difference $\beta$) - 180 (phase shift due to winding direction)" = "$\theta$ - 320".

The control units and their methods described in the present disclosure may be implemented by a dedicated computer including a processor and memory programmed to execute one or more functions embodied by a computer program. Alternatively, the control units and their methods described in the present disclosure may be implemented by a dedicated computer including the processor with one or more dedicated hardware logic circuits. Alternatively, the control units and their methods described in the present disclosure may be implemented by one or more dedicated computers provided by a combination of a processor and memory programmed to execute one or more functions and a processor configured with one or more hardware logic circuits. Furthermore, the computer program may be stored as instructions executed by a computer on a computer-readable non-transitory tangible recording medium.

The following describes the characteristic configurations extracted from the aforementioned embodiments.

Configuration 1

A rotating electric machine (10) includes a rotor (40) having multiple magnetic poles with alternating polarities in a circumferential direction, and a stator (30) including multiple-phase stator windings (32) and a stator core having teeth (T1 to T18) provided at predetermined intervals in the circumferential direction. The stator windings are wound around the teeth. The stator windings include first stator windings (32a) to which currents in three phases are supplied by a first inverter (51), and second stator windings (32b) to which currents in the three phases are supplied by a second inverter (52). The currents in the three phases supplied by the first inverter and the currents in the three phases supplied by the second inverter have a predetermined current phase difference ($\beta$) in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The rotating electrical machine further includes a current command unit (101) configured to determine a current command value in a first dq coordinate system, in which the current phase difference has been corrected through conversion from a three-phase coordinate system. The rotating electrical machine further includes a flux-weakening control unit (110) configured to determine a flux-weakening current ($\Delta$Id) in flux-weakening control based on a q-axis command voltage (Vq') in a second dq coordinate system, in which a voltage phase difference ($\delta$v) has been corrected through conversion from a three-phase coordinate system. The voltage phase difference is a phase difference between a voltage of each phase in the first stator windings and a voltage of each phase in the second stator windings. The current command unit is configured to determine a d-axis current command value based on the flux-weakening current input from the flux-weakening control unit.

Configuration 2

The rotating electric machine according to configuration 1 further includes a current conversion unit (102) configured to acquire a current of each phase, and determine a detected current in the first dq coordinate system through coordinate conversion on the acquired current in each phase. The rotating electrical machine further includes a command voltage determination unit (103, 104) configured to determine a d-axis command voltage and a q-axis command voltage in the first dq coordinate system through current feedback control based on the current command value and the detected current in the first dq coordinate system. The rotating electrical machine further includes a voltage coordinate conversion unit (111) configured to convert the d-axis command voltage and the q-axis command voltage in the first dq coordinate system to a d-axis command voltage and a q-axis command voltage in the second dq coordinate system. The flux-weakening control unit is configured to acquire the q-axis command voltage in the second dq coordinate system from the voltage coordinate conversion unit.

Configuration 3

The rotating electric machine according to configuration 1 further includes a current conversion unit (202) configured to acquire a current of each phase, and determine a detected current in the second dq coordinate system through coordinate conversion on the acquired current in each phase. The rotating electrical machine further includes a current coordinate conversion unit (211) configured to convert a d-axis current command value and a q-axis current command value in the first dq coordinate system to a d-axis current command value and a q-axis current command value in the second dq coordinate system. The rotating electrical machine further includes a command voltage determination unit (203, 204) configured to determine a d-axis command voltage and a q-axis command voltage in the second dq coordinate system through current feedback control based on the d-axis current command value, the q-axis current command value and the detected current in the second dq coordinate system. The flux-weakening control unit is configured to acquire the q-axis command voltage in the second dq coordinate system from the command voltage determination unit.

Configuration 4

A rotating electric machine (10) includes a rotor (40) having multiple magnetic poles with alternating polarities in a circumferential direction, and a stator (30) including multiple-phase stator windings (32) and a stator core having teeth (T1 to T18) provided at predetermined intervals in the circumferential direction. The stator windings are wound around the teeth. The stator windings include first stator windings (32a) to which currents in three phases are supplied by a first inverter (51), and second stator windings (32b) to which currents in the three phases are supplied by a second inverter (52). The currents in the three phases supplied by the first inverter and the currents in the three phases supplied by the second inverter have a predetermined current phase difference ($\beta$) in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The rotating electrical machine further includes a current command unit (101) configured to determine a current command value in a first dq coordinate system, in which the current phase difference has been corrected through conversion from a three-phase coordinate system. The rotating electrical machine further includes an absolute value calculation unit (311) configured to calculate an absolute value of an induced voltage of the stator windings based on a sum of squares of a d-axis command voltage (Vd) and a q-axis command voltage (Vq) in the first dq coordinate system. The rotating electrical machine further includes a flux-weakening control unit (310) configured to determines a flux-weakening current ($\Delta$Id) in flux-weakening control based on the absolute value. The current command unit is configured to determine a d-axis current command value based on the flux-weakening current input from the flux-weakening control unit.

Configuration 5

In the rotating electric machine according to any one of configurations 1 to 4, the stator windings are configured to have a resultant phase difference between a magnetomotive force generated by a winding of the first stator windings wound around a third tooth and a magnetomotive force generated by a winding of the second stator windings wound around the same third tooth, or a resultant phase difference between current flowing through a winding of the first stator windings wound around a third tooth and current flowing through a winding of the second stator windings wound around the same third tooth. (i) Both a phase difference between a magnetomotive force of each of coil bodies Uc, Vc, Wc and a magnetomotive force of each of coil bodies Ua, Va, Wa, and a phase difference between a magnetomotive force of each of coil bodies Ub, Vb, Wb and the magnetomotive force of each of the coil bodies Uc, Vc, Wc, fall within a predetermined phase range including 20 degrees in electrical angle, or (ii) both a phase difference between the magnetomotive force of each of the coil bodies Ub, Vb, Wb and the magnetomotive force of each of the coil bodies Ua, Va, Wa, and the phase difference between the magnetomotive force of each of the coil bodies Ub, Vb, Wb and the magnetomotive force of each of the coil bodies Uc, Vc, Wc, fall within a predetermined phase range including 20 degrees in electrical angle.

Configuration 6

In the rotating electric machine according to configuration 5, a number of turns of each winding of the first stator windings wound around third teeth and a number of turns of each winging of the second stator windings wound around the third teeth are different from a number of turns of each winding of the first stator windings wound around first teeth or a number of turns of each winding of the second stator windings wound around second teeth, so that the magnetomotive force of each of coil bodies Ua, Va, Wa, Ub, Vb, Wb, Uc, Vc, Wc falls within a predetermined amplitude range.

Configuration 7

A control program is executed by a controller (50) of a rotating electric machine (10). The rotating electric machine includes a rotor (40) having multiple magnetic poles with alternating polarities in a circumferential direction, and a stator (30) including multiple-phase stator windings (32) and a stator core having teeth (T1 to T18) provided at predetermined intervals in the circumferential direction. The stator windings are wound around the teeth. The stator windings include first stator windings (32a) to which currents in three phases are supplied by a first inverter (51), and second stator windings (32b) to which currents in the three phases are supplied by a second inverter (52). The currents in the three phases supplied by the first inverter and the currents in the three phases supplied by the second inverter have a predetermined current phase difference ($\beta$) in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The program is configured to cause the controller to perform a current command process (101) determining a current command value in a first dq coordinate system, in which the current phase difference has been corrected through conversion from a three-phase coordinate system. The program is configured to cause the controller to perform a flux-weakening control process (110) determining a flux-weakening current ($\Delta$Id) in flux-weakening control based on a q-axis command voltage (Vq') in a second dq coordinate system, in which a voltage phase difference ($\delta$v) has been corrected through conversion from a three-phase coordinate system. The voltage phase difference is a phase difference between a voltage of each phase in the first stator windings and a voltage of each phase in the second stator windings. The current command unit is configured to determine a d-axis current command value based on the flux-weakening current input from the flux-weakening control unit.

Configuration 8

A control program is executed by a controller (50) of a rotating electric machine (10). The rotating electric machine includes a rotor (40) having multiple magnetic poles with alternating polarities in a circumferential direction, and a stator (30) including multiple-phase stator windings (32) and a stator core having teeth (T1 to T18) provided at predetermined intervals in the circumferential direction. The stator windings are wound around the teeth. The stator windings include first stator windings (32a) to which currents in three phases are supplied by a first inverter (51), and second stator windings (32b) to which currents in the three phases are supplied by a second inverter (52). The currents in the three phases supplied by the first inverter and the currents in the three phases supplied by the second inverter have a predetermined current phase difference ($\beta$) in each corresponding phase. A winding of the first stator windings in U-phase, which is one of the three phases, is wound around a first tooth of the teeth to form a U-phase coil body Ua. A winding of the first stator windings in V-phase, which is one of the three phases, is wound around another first tooth of the teeth to form a V-phase coil body Va. A winding of the first stator windings in W-phase, which is one of the three phases, is wound around another first tooth of the teeth to form a W-phase coil body Wa. A winding of the second stator windings in the U-phase is wound around a second tooth of the teeth to form a U-phase coil body Ub. A winding of the second stator windings in the V-phase is wound around another second tooth of the teeth to form a V-phase coil body Vb. A winding of the second stator windings in the W-phase is wound around another second tooth of the teeth to form a W-phase coil body Wb. A winding of the first stator windings in one of the three phases and a winding of the second stator windings in one of the three phases are wound around a third tooth of the teeth to form a U-phase coil body Uc. A winding of the first stator windings in one of the three phases and a winding of the second stator windings in one of the three phases are wound around another third tooth of the teeth to form a V-phase coil body Vc. A winding of the first stator windings in one of the three phases and a winding of the second stator windings in one of the three phases are wound around another third tooth of the teeth to form a W-phase coil body Wc. The program is configured to cause the controller to perform a current command process (101) determining a current command value in a first dq coordinate system, in which the current phase difference has been corrected through conversion from a three-phase coordinate system. The program is configured to cause the controller to perform an absolute value calculation process (311) calculating an absolute value of an induced voltage based on a sum of squares of a d-axis command voltage (Vd) and a q-axis command voltage (Vq) in the first dq coordinate system. The program is configured to cause the controller to perform a flux-weakening control process (310) determining a flux-weakening current ($\Delta$Id) in flux-weakening control based on the absolute value. The current command process includes determining a d-axis current command value based on the flux-weakening current determined in the flux-weakening control process.

Configuration 9

In the rotating electric machine according to any one of configurations 1 to 5, the resultant phase difference is set in a range of 72 to 88 electrical degrees.

Configuration 10

In the rotating electric machine according to configuration 9, a number of magnetic poles of the rotor is $(18\pm4)\times m$ (where m is an integer of 1 or more), and a number of slots between the teeth is $18\times m$.

Configuration 11

In the rotating electric machine according to configuration 9, a number of magnetic poles of the rotor is $(18\pm2)\times n$ (where n is an integer of 1 or more), and a number of slots between the teeth is $18\times n$. Configuration 12
In the rotating electric machine according to any one of configurations 1 to 5, a number of magnetic poles of the rotor is "14" or "22", a number of slots between the teeth is "18", and the resultant phase difference is 80 degrees in electrical angle.

Configuration 13

In the rotating electric machine according to any one of configurations 1 to 5, a number of magnetic poles of the rotor is "16" or "20", a number of slots between the teeth is "18", and the resultant phase difference is 80 degrees in electrical angle.

Configuration 14

In the rotating electric machine according to any one of configurations 9 to 13, a number of turns of the first stator windings wound around the first teeth and the number of turns of the second stator windings wound around the second teeth are each "Na", and a number of turns of the first stator windings wound around the third teeth and the number of turns of the second stator windings wound around the third teeth are each "Nb", such that the relationship $1.4\leq Na/Nb\leq1.6$ is

satisfied.

Configuration 15

In the rotating electric machine according to any one of configurations 1 to 5, the resultant phase difference is set in a range of 32 to 48 electrical degrees.

Configuration 16

In the rotating electric machine according to configuration 15, a number of magnetic poles of the rotor is $(18 \pm 4) \times m$ (where m is an integer of 1 or more), and a number of slots between the teeth is $18 \times m$.

Configuration 17

In the rotating electric machine according to configuration 15, a number of magnetic poles of the rotor is $(18 \pm 2) \times n$ (where n is an integer of 1 or more), and a number of slots between the teeth is $18 \times n$.

Configuration 18

In the rotating electric machine according to any one of configurations 1 to 5, a number of magnetic poles of the rotor is "16" or "20", a number of slots between the teeth is "18", and the resultant phase difference is 40 degrees in electrical angle.

Configuration 19

In the rotating electric machine according to any one of configurations 15 to 18, a number of turns of the first stator windings wound around the first teeth and the number of turns of the second stator windings wound around the second teeth are each "Na", and a number of turns of the first stator windings wound around the third teeth and the number of turns of the second stator windings wound around the third teeth are each "Nb", such that the relationship $1.8 \leq Na/Nb \leq 2.0$ is satisfied.

Configuration 20

In the rotating electric machine according to any one of configurations 1 to 5 and 9 to 19, a current phase difference between the currents in the three-phases supplied from by the first inverter and the currents in three-phases supplied by the second inverter is set within a range of 15 to 25 degrees or within a range of 35 to 45 degrees.

Configuration 21

In the rotating electric machine according to any one of configurations 1 to 5 and 9 to 20, the rotating electric machine includes a rotating shaft (11) provided with an angle sensor (12). Lead wires (A1, B1, C1) of the first stator windings connected to the first inverter and lead wires (A2, B2, C2) of the second stator windings connected to the second inverter are arranged so that each phase is symmetrical about the rotating shaft.
Although the present disclosure has been described in accordance with the examples, it is understood that the present disclosure is not limited to such examples or structures. The present disclosure encompasses various modifications and variations within the scope of equivalents. In addition, while the various combinations and configurations, which are preferred, other combinations and configurations, including more, less or only a single element, are also within the spirit and scope of the present disclosure.

**Claims**

1.  A rotating electrical machine (10) comprising:

    a rotor (40) having multiple magnetic poles with alternating polarities in a circumferential direction; and
    a stator (30) including multiple-phase stator windings (32) and a stator core having teeth (T1 to T18) provided at predetermined intervals in the circumferential direction, the stator windings being wound around the teeth, wherein

the stator windings include first stator windings (32a) to which currents in three phases are supplied by a first inverter (51), and second stator windings (32b) to which currents in the three phases are supplied by a second inverter (52),

the currents in the three phases supplied by the first inverter and the currents in the three phases supplied by the second inverter have a predetermined current phase difference ($\beta$) in each corresponding phase,

a winding of the first stator windings in U-phase, which is one of the three phases, is wound around a first tooth of the teeth to form a U-phase coil body Ua,

a winding of the first stator windings in V-phase, which is one of the three phases, is wound around another first tooth of the teeth to form a V-phase coil body Va,

a winding of the first stator windings in W-phase, which is one of the three phases, is wound around another first tooth of the teeth to form a W-phase coil body Wa,

a winding of the second stator windings in the U-phase is wound around a second tooth of the teeth to form a U-phase coil body Ub,

a winding of the second stator windings in the V-phase is wound around another second tooth of the teeth to form a V-phase coil body Vb,

a winding of the second stator windings in the W-phase is wound around another second tooth of the teeth to form a W-phase coil body Wb,

a winding of the first stator windings in one of the three phases and a winding of the second stator windings in one of the three phases are wound around a third tooth of the teeth to form a U-phase coil body Uc,

a winding of the first stator windings in one of the three phases and a winding of the second stator windings in one of the three phases are wound around another third tooth of the teeth to form a V-phase coil body Vc,

a winding of the first stator windings in one of the three phases and a winding of the second stator windings in one of the three phases are wound around another third tooth of the teeth to form a W-phase coil body Wc,

the rotating electrical machine further comprises:

a current command unit (101) configured to determine a current command value in a first dq coordinate system, in which the current phase difference has been corrected through conversion from a three-phase coordinate system; and

a flux-weakening control unit (110) configured to determine a flux-weakening current ($\Delta Id$) in flux-weakening control based on a q-axis command voltage (Vq') in a second dq coordinate system, in which a voltage phase difference ($\delta v$) has been corrected through conversion from a three-phase coordinate system, the voltage phase difference being a phase difference between a voltage of each phase in the first stator windings and a voltage of each phase in the second stator windings, and

the current command unit is configured to determine a d-axis current command value based on the flux-weakening current input from the flux-weakening control unit.

2. The rotating electric machine according to claim 1, further comprising:

a current conversion unit (102) configured to acquire a current of each phase, and determine a detected current in the first dq coordinate system through coordinate conversion on the acquired current in each phase;

a command voltage determination unit (103, 104) configured to determine a d-axis command voltage and a q-axis command voltage in the first dq coordinate system through current feedback control based on the current command value and the detected current in the first dq coordinate system; and

a voltage coordinate conversion unit (111) configured to convert the d-axis command voltage and the q-axis command voltage in the first dq coordinate system to a d-axis command voltage and a q-axis command voltage in the second dq coordinate system, wherein

the flux-weakening control unit is configured to acquire the q-axis command voltage in the second dq coordinate system from the voltage coordinate conversion unit.

3. The rotating electric machine according to claim 1, further comprising:

a current conversion unit (202) configured to acquire a current of each phase, and determine a detected current in the second dq coordinate system through coordinate conversion on the acquired current in each phase;

a current coordinate conversion unit (211) configured to convert a d-axis current command value and a q-axis current command value in the first dq coordinate system to a d-axis current command value and a q-axis current command value in the second dq coordinate system; and

a command voltage determination unit (203, 204) configured to determine a d-axis command voltage and a q-axis command voltage in the second dq coordinate system through current feedback control based on the d-axis current command value, the q-axis current command value and the detected current in the second dq coordinate system, wherein

the flux-weakening control unit is configured to acquire the q-axis command voltage in the second dq coordinate system from the command voltage determination unit.

4. A rotating electrical machine (10) comprising:

a rotor (40) having multiple magnetic poles with alternating polarities in a circumferential direction; and

a stator (30) including multiple-phase stator windings (32) and a stator core having teeth (T1 to T18) provided at predetermined intervals in the circumferential direction, the stator windings being wound around the teeth, wherein

the stator windings include first stator windings (32a) to which currents in three phases are supplied by a first inverter (51), and second stator windings (32b) to which currents in the three phases are supplied by a second inverter (52),

the currents in the three phases supplied by the first inverter and the currents in the three phases supplied by the second inverter have a predetermined current phase difference ($\beta$) in each corresponding phase,

a winding of the first stator windings in U-phase, which is one of the three phases, is wound around a first tooth of the teeth to form a U-phase coil body Ua,

a winding of the first stator windings in V-phase, which is one of the three phases, is wound around another first tooth of the teeth to form a V-phase coil body Va,

a winding of the first stator windings in W-phase, which is one of the three phases, is wound around another first tooth of the teeth to form a W-phase coil body Wa,

a winding of the second stator windings in the U-phase is wound around a second tooth of the teeth to form a U-phase coil body Ub,

a winding of the second stator windings in the V-phase is wound around another second tooth of the teeth to form a V-phase coil body Vb,

a winding of the second stator windings in the W-phase is wound around another second tooth of the teeth to form a W-phase coil body Wb,

a winding of the first stator windings in one of the three phases and a winding of the second stator windings in one of the three phases are wound around a third tooth of the teeth to form a U-phase coil body Uc,

a winding of the first stator windings in one of the three phases and a winding of the second stator windings in one of the three phases are wound around another third tooth of the teeth to form a V-phase coil body Vc,

a winding of the first stator windings in one of the three phases and a winding of the second stator windings in one of the three phases are wound around another third tooth of the teeth to form a W-phase coil body Wc,

the rotating electrical machine further comprises:

a current command unit (101) configured to determine a current command value in a first dq coordinate system, in which the current phase difference has been corrected through conversion from a three-phase coordinate system;

an absolute value calculation unit (311) configured to calculate an absolute value of an induced voltage of the stator windings based on a sum of squares of a d-axis command voltage (Vd) and a q-axis command voltage (Vq) in the first dq coordinate system; and

a flux-weakening control unit (310) configured to determine a flux-weakening current ($\Delta$Id) in flux-weakening control based on the absolute value, and

the current command unit is configured to determine a d-axis current command value based on the flux-weakening current input from the flux-weakening control unit.

5. The rotating electrical machine according to any one of claims 1 to 4, wherein the stator windings are configured to have

a resultant phase difference between a magnetomotive force generated by a winding of the first stator windings wound around a third tooth and a magnetomotive force generated by a winding of the second stator windings wound around the same third tooth, or

a resultant phase difference between current flowing through a winding of the first stator windings wound around a third tooth and current flowing through a winding of the second stator windings wound around the same third tooth, and

(i) both a phase difference between a magnetomotive force of each of coil bodies Uc, Vc, Wc and a magnetomotive force of each of coil bodies Ua, Va, Wa, and a phase difference between a magnetomotive force of each of coil bodies Ub, Vb, Wb and the magnetomotive force of each of the coil bodies Uc, Vc, Wc, fall within a predetermined phase range including 20 degrees in electrical angle, or

(ii) both a phase difference between the magnetomotive force of each of the coil bodies Ub, Vb, Wb and the magnetomotive force of each of the coil bodies Ua, Va, Wa, and the phase difference between the magnetomotive force of each of the coil bodies Ub, Vb, Wb and the magnetomotive force of each of the coil bodies Uc, Vc, Wc, fall within a predetermined phase range including 20 degrees in electrical angle.

6. The rotating electric machine according to claim 5, wherein

a number of turns of each winding of the first stator windings wound around third teeth and a number of turns of each winging of the second stator windings wound around the third teeth are different from a number of turns of each winding of the first stator windings wound around first teeth or a number of turns of each winding of the second stator windings wound around second teeth, so that the magnetomotive force of each of coil bodies Ua, Va, Wa, Ub, Vb, Wb, Uc, Vc, Wc falls within a predetermined amplitude range.

7. A control program executed by a controller (50) of a rotating electric machine (10), wherein

the rotating electric machine include:

a rotor (40) having multiple magnetic poles with alternating polarities in a circumferential direction; and
a stator (30) including multiple-phase stator windings (32) and a stator core having teeth (T1 to T18) provided at predetermined intervals in the circumferential direction, the stator windings being wound around the teeth,

the stator windings include first stator windings (32a) to which currents in three phases are supplied by a first inverter (51), and second stator windings (32b) to which currents in the three phases are supplied by a second inverter (52),
the currents in the three phases supplied by the first inverter and the currents in the three phases supplied by the second inverter have a predetermined current phase difference ($\beta$) in each corresponding phase,
a winding of the first stator windings in U-phase, which is one of the three phases, is wound around a first tooth of the teeth to form a U-phase coil body Ua,
a winding of the first stator windings in V-phase, which is one of the three phases, is wound around another first tooth of the teeth to form a V-phase coil body Va,
a winding of the first stator windings in W-phase, which is one of the three phases, is wound around another first tooth of the teeth to form a W-phase coil body Wa,
a winding of the second stator windings in the U-phase is wound around a second tooth of the teeth to form a U-phase coil body Ub,
a winding of the second stator windings in the V-phase is wound around another second tooth of the teeth to form a V-phase coil body Vb,
a winding of the second stator windings in the W-phase is wound around another second tooth of the teeth to form a W-phase coil body Wb,
a winding of the first stator windings in one of the three phases and a winding of the second stator windings in one of the three phases are wound around a third tooth of the teeth to form a U-phase coil body Uc,
a winding of the first stator windings in one of the three phases and a winding of the second stator windings in one of the three phases are wound around another third tooth of the teeth to form a V-phase coil body Vc, and
a winding of the first stator windings in one of the three phases and a winding of the second stator windings in one of the three phases are wound around another third tooth of the teeth to form a W-phase coil body Wc,
the program is configured to cause the controller to perform:

a current command process (101) determining a current command value in a first dq coordinate system, in which the current phase difference has been corrected through conversion from a three-phase coordinate system; and
a flux-weakening control process (110) determining a flux-weakening current ($\Delta$Id) in flux-weakening control based on a q-axis command voltage (Vq') in a second dq coordinate system, in which a voltage phase difference ($\delta$v) has been corrected through conversion from a three-phase coordinate system, the voltage phase difference being a phase difference between a voltage of each phase in the first stator windings and a voltage of each phase in the second stator windings, wherein

the current command process includes determining a d-axis current command value based on the flux-weakening current input from the flux-weakening control unit.

8. A control program executed by a controller (50) of a rotating electric machine (10), wherein

the rotating electric machine includes:

a rotor (40) having multiple magnetic poles with alternating polarities in a circumferential direction; and
a stator (30) including multiple-phase stator windings (32) and a stator core having teeth (T1 to T18) provided at predetermined intervals in the circumferential direction, the stator windings being wound around the teeth,

the stator windings include first stator windings (32a) to which currents in three phases are supplied by a first inverter (51), and second stator windings (32b) to which currents in the three phases are supplied by a second inverter (52),
the currents in the three phases supplied by the first inverter and the currents in the three phases supplied by the second inverter have a predetermined current phase difference ($\beta$) in each corresponding phase,
a winding of the first stator windings in U-phase, which is one of the three phases, is wound around a first tooth of the teeth to form a U-phase coil body Ua,
a winding of the first stator windings in V-phase, which is one of the three phases, is wound around another first tooth of the teeth to form a V-phase coil body Va,
a winding of the first stator windings in W-phase, which is one of the three phases, is wound around another first tooth of the teeth to form a W-phase coil body Wa,
a winding of the second stator windings in the U-phase is wound around a second tooth of the teeth to form a U-phase coil body Ub,
a winding of the second stator windings in the V-phase is wound around another second tooth of the teeth to form a V-phase coil body Vb,
a winding of the second stator windings in the W-phase is wound around another second tooth of the teeth to form a W-phase coil body Wb,
a winding of the first stator windings in one of the three phases and a winding of the second stator windings in one of the three phases are wound around a third tooth of the teeth to form a U-phase coil body Uc,
a winding of the first stator windings in one of the three phases and a winding of the second stator windings in one of the three phases are wound around another third tooth of the teeth to form a V-phase coil body Vc, and
a winding of the first stator windings in one of the three phases and a winding of the second stator windings in one of the three phases are wound around another third tooth of the teeth to form a W-phase coil body Wc,
the program is configured to cause the controller to perform:

a current command process (101) determining a current command value in a first dq coordinate system, in which the current phase difference has been corrected through conversion from a three-phase coordinate system;
an absolute value calculation process (311) calculating an absolute value of an induced voltage based on a sum of squares of a d-axis command voltage (Vd) and a q-axis command voltage (Vq) in the first dq coordinate system; and
a flux-weakening control process (310) determining a flux-weakening current ($\Delta$Id) in flux-weakening control based on the absolute value, wherein

the current command process includes determining a d-axis current command value based on the flux-weakening current determined in the flux-weakening control process.

# FIG. 1

EP 4 664 747 A1

EP 4 664 747 A1

# FIG. 2

# FIG. 3

# FIG. 4

NUMBER OF MAGNETIC POLES: 14
NUMBER OF SLOTS: 18
CURRENT PHASE DIFFERENCE: 20°
RESULTANT PHASE DIFFERENCE: 80°

| TOOTH | PARTIAL WINDING | COIL BODY | ELECTRIC ANGLE |
|---|---|---|---|
| T1 | +U11 | +Ua | 0 |
| T2 | +V21 | +Vb | 140 |
| T3 | +W11／−V22 | +Wc | 280 |
| T4 | −W12 | −Wa | 60 |
| T5 | −U21 | −Ub | 200 |
| T6 | −V11／+U22 | −Vc | 340 |
| T7 | +V12 | +Va | 120 |
| T8 | +W21 | +Wb | 260 |
| T9 | +U12／−W22 | +Uc | 40 |
| T10 | −U13 | −Ua | 180 |
| T11 | −V23 | −Vb | 320 |
| T12 | −W13／+V24 | −Wc | 100 |
| T13 | +W14 | +Wa | 240 |
| T14 | +U23 | +Ub | 20 |
| T15 | +V13／−U24 | +Vc | 160 |
| T16 | −V14 | −Va | 300 |
| T17 | −W23 | −Wb | 80 |
| T18 | −U14／+W24 | −Uc | 220 |

# FIG. 5

(a)

A1

+U11

+U12

32a

−U13

−U14

−V14

+V13

+V12

−V11

Q

B1

+W14

−W13

−W12

+W11

C1

(b)

A2

−U21

+U22

32b

+U23

−U24

+V24

−V23

−V22

+V21

Q

B2

+W24

−W23

−W22

+W21

C2

# FIG. 6

# FIG. 7

(a)

ELECTRIC ANGLE [degE] (TIME)

(b)

ELECTRIC ANGLE [degE] (TIME)

# FIG. 8

# FIG. 9

(a)

TEETH ELECTROMAGNETIC FORCE

MAGNET POSITION

MOTOR MECHANICAL ANGLE [deg]

(b)

EP 4 664 747 A1

# FIG. 10

EP 4 664 747 A1

# FIG. 11

(a)

(b)

# FIG. 12

| CURRENT PHASE DIFFERENCE $\beta$ | 20° | 20° | 40° | 40° |
|---|---|---|---|---|
| RESULTANT PHASE DIFFERENCE (MAGNETOMOTIVE FORCE PHASE DIFFERENCE) | 80° | 40° | 80° | 40° |
| VOLTAGE PHASE DIFFERENCE $\delta$v | −12° | 34° | 72° | 26° |
| CURRENT PHASE DIFFERENCE − VOLTAGE PHASE DIFFERENCE | −32° | 14° | 32° | −14° |

41

# FIG. 13

(a)

(b)

# FIG. 14

# FIG. 15

EP 4 664 747 A1

# FIG. 16

NUMBER OF MAGNETIC POLES: 14
NUMBER OF SLOTS: 18
CURRENT PHASE DIFFERENCE: 20°
RESULTANT PHASE DIFFERENCE: 40°

| TOOTH | PARTIAL WINDING | COIL BODY | ELECTRIC ANGLE |
|---|---|---|---|
| T1 | +U11 | +Ua | 0 |
| T2 | +V21 | +Vb | 140 |
| T3 | +V11／−W21 | +Wc | 280 |
| T4 | −W11 | −Wa | 60 |
| T5 | −U21 | −Ub | 200 |
| T6 | +U12／−V22 | −Vc | 340 |
| T7 | +V12 | +Va | 120 |
| T8 | +W22 | +Wb | 260 |
| T9 | −W12／+U22 | +Uc | 40 |
| T10 | −U13 | −Ua | 180 |
| T11 | −V23 | −Vb | 320 |
| T12 | +V13／−W23 | −Wc | 100 |
| T13 | +W13 | +Wa | 240 |
| T14 | +U23 | +Ub | 20 |
| T15 | −U14／+V24 | +Vc | 160 |
| T16 | −V14 | −Va | 300 |
| T17 | −W24 | −Wb | 80 |
| T18 | +W14／−U24 | −Uc | 220 |

# FIG. 17

# FIG. 18

# FIG. 19

NUMBER OF MAGNETIC POLES: 14
NUMBER OF SLOTS: 18
CURRENT PHASE DIFFERENCE: 40°
RESULTANT PHASE DIFFERENCE: 80°

| TOOTH | PARTIAL WINDING | COIL BODY | ELECTRIC ANGLE |
|---|---|---|---|
| T1 | +U11 | +Ua | 0 |
| T2 | −U12／−W21 | +Vc | 140 |
| T3 | +W22 | +Wb | 280 |
| T4 | −W11 | −Wa | 60 |
| T5 | +W12／+V21 | −Uc | 200 |
| T6 | −V22 | −Vb | 340 |
| T7 | +V11 | +Va | 120 |
| T8 | −V12／−U21 | +Wc | 260 |
| T9 | +U22 | +Ub | 40 |
| T10 | −U13 | −Ua | 180 |
| T11 | +U14／+W23 | −Vc | 320 |
| T12 | −W24 | −Wb | 100 |
| T13 | +W13 | +Wa | 240 |
| T14 | −W14／−V23 | +Uc | 20 |
| T15 | +V24 | +Vb | 160 |
| T16 | −V13 | −Va | 300 |
| T17 | +V14／+U23 | −Wc | 80 |
| T18 | −U24 | −Ub | 220 |

# FIG. 20

NUMBER OF MAGNETIC POLES: 14
NUMBER OF SLOTS: 18
CURRENT PHASE DIFFERENCE: 40°
RESULTANT PHASE DIFFERENCE: 40°

| TOOTH | PARTIAL WINDING | COIL BODY | ELECTRIC ANGLE |
|-------|-----------------|-----------|----------------|
| T1 | +U11 | +Ua | 0 |
| T2 | +V11／+V21 | +Vc | 140 |
| T3 | +W21 | +Wb | 280 |
| T4 | −W11 | −Wa | 60 |
| T5 | −U12／−U21 | −Uc | 200 |
| T6 | −V22 | −Vb | 340 |
| T7 | +V12 | +Va | 120 |
| T8 | +W12／+W22 | +Wc | 260 |
| T9 | +U22 | +Ub | 40 |
| T10 | −U13 | −Ua | 180 |
| T11 | −V13／−V23 | −Vc | 320 |
| T12 | −W23 | −Wb | 100 |
| T13 | +W13 | +Wa | 240 |
| T14 | +U14／+U23 | +Uc | 20 |
| T15 | +V24 | +Vb | 160 |
| T16 | −V14 | −Va | 300 |
| T17 | −W14／−W24 | −Wc | 80 |
| T18 | −U24 | −Ub | 220 |

# FIG. 21

| NUMBER OF POLES | 22 | | | |
|---|---|---|---|---|
| NUMBER OF SLOTS | 18 | | | |
| CURRENT PHASE DIFFERENCE | 20deg | | 40deg | |
| RESULTANT PHASE DIFFERENCE | 80deg | 40deg | 80deg | 40deg |
| TOOTH T1 | +U11 | +U11 | +U11 | +U11 |
| TOOTH T2 | −U12/+W21 | +W11/−U21 | −U21 | −U21 |
| TOOTH T3 | −W22 | −W21 | +V11/+U22 | −W11/−W21 |
| TOOTH T4 | −V11 | −V11 | −V12 | −V11 |
| TOOTH T5 | +V12/−U21 | −U12/+V21 | +V21 | +V21 |
| TOOTH T6 | +U22 | +U22 | −W11/−V22 | +U12/+U22 |
| TOOTH T7 | +W11 | +W12 | +W12 | +W12 |
| TOOTH T8 | −W12/+V21 | +V12/−W22 | −W21 | −W22 |
| TOOTH T9 | −V22 | −V22 | +U12/+W22 | −V12/−V22 |
| TOOTH T10 | −U13 | −U13 | −U13 | −U13 |
| TOOTH T11 | +U14/−W23 | −W13/+U23 | +U23 | +U23 |
| TOOTH T12 | +W24 | +W23 | −V13/−U24 | +W13/+W23 |
| TOOTH T13 | +V13 | +V13 | +V14 | +V13 |
| TOOTH T14 | −V14/+U23 | +U14/−V23 | −V23 | −V23 |
| TOOTH T15 | −U24 | −U24 | +W13/+V24 | −U14/−U24 |
| TOOTH T16 | −W13 | −W14 | −W14 | −W14 |
| TOOTH T17 | +W14/−V23 | −V14/+W24 | +W23 | +W24 |
| TOOTH T18 | +V24 | +V24 | −U14/−W24 | +V14/+V24 |

EP 4 664 747 A1

## FIG. 22

| | 20deg | | 40deg | |
|---|---|---|---|---|
| NUMBER OF POLES | 16 | | | |
| NUMBER OF SLOTS | 18 | | | |
| CURRENT PHASE DIFFERENCE | 20deg | | 40deg | |
| RESULTANT PHASE DIFFERENCE | 80deg | 40deg | 80deg | 40deg |
| TOOTH T1 | +U11 | +U11 | +U11 | +U11 |
| TOOTH T2 | +V11/−U21 | −U12/+V21 | +V21 | +V21 |
| TOOTH T3 | −V21 | −V22 | +U12/+W21 | −V11/−V22 |
| TOOTH T4 | +V12 | +V11 | +V11 | +V12 |
| TOOTH T5 | +W11/−V22 | −V12/+W21 | +W22 | +W21 |
| TOOTH T6 | −W21 | −W22 | +V12/+U21 | −W11/−W22 |
| TOOTH T7 | +W12 | +W11 | +W11 | +W12 |
| TOOTH T8 | +U12/−W22 | −W12/+U21 | +U22 | +U21 |
| TOOTH T9 | −U22 | −U22 | +W12/+V22 | −U12/−U22 |
| TOOTH T10 | +U13 | +U13 | +U13 | +U13 |
| TOOTH T11 | +V13/−U23 | −U14/+V23 | +V23 | +V23 |
| TOOTH T12 | −V23 | −V24 | +U14/+W23 | −V13/−V24 |
| TOOTH T13 | +V14 | +V13 | +V13 | +V14 |
| TOOTH T14 | +W13/−V24 | −V14/+W23 | +W24 | +W23 |
| TOOTH T15 | −W23 | −W24 | +V14/+U23 | −W13/−W24 |
| TOOTH T16 | +W14 | +W13 | +W13 | +W14 |
| TOOTH T17 | +U14/−W24 | −W14/+U23 | +U24 | +U23 |
| TOOTH T18 | −U24 | −U24 | +W14/+V24 | −U14/−U24 |

EP 4 664 747 A1

**FIG. 23**

| | 20deg | | 40deg | |
|---|---|---|---|---|
| NUMBER OF POLES | 20 | | | |
| NUMBER OF SLOTS | 18 | | | |
| CURRENT PHASE DIFFERENCE | 20deg | | 40deg | |
| RESULTANT PHASE DIFFERENCE | 80deg | 40deg | 80deg | 40deg |
| TOOTH T1 | +U11 | +U11 | +U11 | +U11 |
| TOOTH T2 | −U21 | −U21 | +W11/+V21 | −U12/−U21 |
| TOOTH T3 | +U12/−W21 | −W11/+U22 | +U21 | +U22 |
| TOOTH T4 | +W11 | +W12 | +W12 | +W11 |
| TOOTH T5 | −W22 | −W21 | +V11/+U22 | −W12/−W21 |
| TOOTH T6 | +W12/−V21 | −V11/+W22 | +W21 | +W22 |
| TOOTH T7 | +V11 | +V12 | +V12 | +V11 |
| TOOTH T8 | −V22 | −V21 | +U12/+W22 | −V12/−V21 |
| TOOTH T9 | +V12/−U22 | −U12/+V22 | +V22 | +V22 |
| TOOTH T10 | +U13 | +U13 | +U13 | +U13 |
| TOOTH T11 | −U23 | −U23 | +W13/+V23 | −U14/−U23 |
| TOOTH T12 | +U14/−W23 | −W13/+U24 | +U23 | +U24 |
| TOOTH T13 | +W13 | +W14 | +W14 | +W13 |
| TOOTH T14 | −W24 | −W23 | +V13/+U24 | −W14/−W23 |
| TOOTH T15 | +W14/−V23 | −V13/+W24 | +W23 | +W24 |
| TOOTH T16 | +V13 | +V14 | +V14 | +V13 |
| TOOTH T17 | −V24 | −V23 | +U14/+W24 | −V14/−V23 |
| TOOTH T18 | +V14/−U24 | −U24/+V24 | +V24 | V24 |

## INTERNATIONAL SEARCH REPORT

International application No.

**PCT/JP2024/000792**

### A. CLASSIFICATION OF SUBJECT MATTER

***H02P 21/22***(2016.01)i; ***H02K 3/18***(2006.01)i; ***H02P 25/22***(2006.01)i
FI:  H02P21/22; H02K3/18 P; H02P25/22

According to International Patent Classification (IPC) or to both national classification and IPC

### B. FIELDS SEARCHED

Minimum documentation searched (classification system followed by classification symbols)

H02P21/22; H02K3/18; H02P25/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-178519 A (DENSO CORP.) 29 October 2020 (2020-10-29)<br>entire text, all drawings | 1-8 |
| A | JP 2021-197866 A (DENSO CORP.) 27 December 2021 (2021-12-27)<br>entire text, all drawings | 1-8 |
| A | JP 2020-184855 A (DENSO CORP.) 12 November 2020 (2020-11-12)<br>entire text, all drawings | 1-8 |

☐ Further documents are listed in the continuation of Box C.  ☑ See patent family annex.

\*  Special categories of cited documents:
"A"  document defining the general state of the art which is not considered to be of particular relevance
"D"  document cited by the applicant in the international application
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **26 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/000792**

| Patent document cited in search report | | | Publication date (day/month/year) | Patent family member(s) | | | Publication date (day/month/year) |
|---|---|---|---|---|---|---|---|
| JP | 2020-178519 | A | 29 October 2020 | US | 2020/0336058 | A1 | |
| | | | | entire text, all drawings | | | |
| | | | | CN | 111835102 | A | |
| JP | 2021-197866 | A | 27 December 2021 | US | 2023/0116678 | A1 | |
| | | | | entire text, all drawings | | | |
| | | | | CN | 115461982 | A | |
| | | | | WO | 2021/256312 | A1 | |
| JP | 2020-184855 | A | 12 November 2020 | US | 2020/0353973 | A1 | |
| | | | | entire text, all drawings | | | |
| | | | | CN | 111917354 | A | |

Form PCT/ISA/210 (patent family annex) (July 2022)

**EP 4 664 747 A1**

**Patent documents cited in the description**

- JP 2023017138 A

- JP 7103299 B